(19) Europäisches Patentamt
European Patent Office
Office européen des brevets

(11) **EP 3 155 153 B1**

(12) **EUROPEAN PATENT SPECIFICATION**

(45) Date of publication and mention
of the grant of the patent:
**18.03.2026 Bulletin 2026/12**

(21) Application number: **15735774.0**

(22) Date of filing: **16.06.2015**

(51) International Patent Classification (IPC):
***D03D 15/00*** (2021.01)      ***D03D 13/00*** (2006.01)

(52) Cooperative Patent Classification (CPC):
**D03D 13/008; D03D 15/283; D03D 15/37;
D03D 15/46; D03D 15/513; D03D 15/573;
D04B 1/16; D04B 1/26;** D10B 2201/02;
D10B 2321/04; D10B 2321/042; D10B 2331/02;
D10B 2331/021; D10B 2331/061; D10B 2331/301

(86) International application number:
**PCT/US2015/035922**

(87) International publication number:
**WO 2015/195598 (23.12.2015 Gazette 2015/51)**

(54) **FABRICS CONTAINING EXPANDED POLYTETRAFLUOROETHYLENE FIBERS**

GEWEBE MIT EXPANDIERTEN POLYTETRAFLUORETHYLENFASERN

TISSUS CONTENANT DES FIBRES DE POLYTÉTRAFLUOROÉTHYLÈNE EXPANSÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2014 US 201462012800 P
15.06.2015 US 201514739847**

(43) Date of publication of application:
**19.04.2017 Bulletin 2017/16**

(73) Proprietor: **W. L. Gore & Associates, Inc.
Newark, DE 19711 (US)**

(72) Inventors:
• **MINOR, David, J.
Elkton, MD 21921 (US)**
• **ARIFOGLU, Mustafa
West Chester, PA 19382 (US)**
• **MINOR, Raymond, B.
Elkton, MD 21921 (US)**

(74) Representative: **HGF
HGF Limited
4th Floor, 1 City Square
Leeds LS1 2ES (GB)**

(56) References cited:
EP-A1- 3 271 505          WO-A1-2013/151950
WO-A1-2015/041779      WO-A1-94/02668
WO-A2-2008/148126      US-A- 5 635 124
US-A1- 2008 032 576

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD**

The present disclosure relates generally to fabrics, and more specifically to a fabrics formed from expanded polytetrafluoroethylene (ePTFE) fibers and at least one other fiber that is lightweight, breathable, drapable, durable, and dries in 30 min or less.

**BACKGROUND**

Sufficiently durable protective and comfortable clothing is well-known in the art, and is generally constructed from different fabric materials for different applications. These materials have been constructed utilizing man-made, natural, or blended fibers thereof which are woven or knitted, colored, and subsequently cut and sewn into garments. Examples of natural fibers may include cotton (cellulose) or wool (protein), and examples of man-made fibers may include aramid, polyester, or polyamide (organic). In addition, these fibers may take the form of staple, filament, plied, textured or other, depending on the material used.

One such application example is a military combat uniform. Traditionally, these were constructed from heavy woven 100% staple cotton fabrics, which have been utilized to provide sufficient durability and comfort along with no melt/no drip performance when exposed to flame (prevents meltable material from attaching to the skin). When lighter weight was needed along with sufficient durability, an intimate staple blend of polyester/cotton or polyamide/cotton was created to enhance durability while still meeting the no melt/no drip and comfort requirements. If no melt/no drip is not important, as is in many consumer applications, garments may also be constructed from man-made high strength filament nylon or polyester fibers in addition to cotton for even lighter, durable and comfortable applications. If flame resistance is needed, Nomex® staple fibers or blends thereof are typically used to prevent burn injuries while providing acceptable durability and comfort.

To even further enhance properties, many additional blends and treatments have been created. A durable water repellent treatment may be applied to lower the surface energy of a fabric to repel water for a period of time. Fibers may be imbibed with silicon to prevent entry into the fiber bundle structure for a period of time. Low friction, hydrophobic fibers have been added in a blend to reduce friction upon skin contact (or another surface) with the fabric as well as alter wicking characteristics with push/pull phenomenon. However, one significant arena in fabrics that is yet to be achieved is to create fabrics that can be mechanically durable (high tear strength, break strength, and coverage), highly comfortable (next to skin wicking comfort, great skin sensorial, high breathability) with durable very low water weight gain, and fast dry out at a variety of weight ranges. The need for a garment to dry fast is particularly important in hot and humid environments where users need highly durable, comfortable, and protective clothing that does not gain a lot of water weight and take a long time to dry. Typically, water weight gain is dependent upon the amount of material used (the higher the fabric weight, the more water it can hold). This is because most fibers have a limited density and porosity within the fiber bundle for water to fill, with sometimes additional space for moisture in hygroscopic fibers. Therefore, fabrics tend to be heavy in order to be durable enough in use, which lead to discomfort from long dry times and significant water weight gain. Water repellent treatments, intimately blended staple fibers, high strength fibers, and filled fibers have not yet been found to be durable or comfortable enough to be widely adopted over traditional natural or synthetic fabrics (cotton, polyamide, polyester, wool, aramid) in this realm.

The document WO 2013/151950 A1 discloses a woven fabric comprising a plurality of warp fibers and weft fibers that include ePTFE fibers and at least one non-ePTFE fiber. The fabric has a vertical wicking of less than 150 mm and a weight per unit area of less than 1000 g/m$^2$.

The document WO 94/02668 A discloses a knit fabric comprising a plurality of ePTFE fibers having a substantially rectangular configuration and a density greater than 1.2 g/cm$^3$ and a plurality of knit fibers in a knit configuration.

Therefore, there exists a need in the art to create durable, fast dry (has a low water pick-up), comfortable, and protective fabrics in the art.

**SUMMARY**

The claimed invention is defined by the claims appended herein. One embodiment of the invention relates to a woven fabric that includes (1) a plurality of warp and weft fibers wherein the warp fibers, the weft fibers or both the warp fibers and the weft fibers include expanded polytetrafluoroethylene (ePTFE) fibers having a substantially rectangular cross-sectional configuration and (2) at least one non-ePTFE fiber. The ePTFE fibers have a pre-weaving density from about 0.1 g/cm$^3$ to about 2.2 g/cm$^3$ and an aspect ratio that is greater than about 1. In one exemplary embodiment, at least one weave fiber is a fire resistant fiber. The ePTFE fiber may be at least partially filled with an oil and/or a polymer. The fabric has a dry time less than 30 mins, a vertical wicking of greater than 90 mm/10 mins, and weight per unit area of less than

about 1000 g/m$^2$. In addition, the woven fabric is flexible and has an average stiffness of less than about 1000 g. A polymer membrane may be affixed to at least one side of said fabric to form a laminated structure. The woven fabric concurrently possesses high moisture vapor transmission (i.e., highly breathable), is highly durable, lightweight, and fast drying.

An embodiment of the disclosure relates to a woven fabric that includes (1) warp fibers and weft fibers where each of the warp fibers or each of the weft fibers consist of expanded polytetrafluoroethylene (ePTFE) fibers have a substantially rectangular cross sectional configuration and (2) a plurality of non-ePTFE fibers. The warp or weft fibers that do not consist of ePTFE fibers include non-ePTFE fibers. The warp fibers may consist of ePTFE fibers and the weft fibers may include non-ePTFE fibers, and vice versa. In one embodiment the non-ePTFE fibers include at least one fire resistant fiber. The woven fabric may have a tear strength from about 10 N to about 200 N, a break strength from about 100 N to about 1500 **N,** and/or an air permeability less than about 500 cfm. Additionally, the woven fabric has a dry time less than 30 mins, a vertical wicking of greater than 90 mm/10 mins, and weight per unit area of less than about 1000 g/m$^2$.

An embodiment of the disclosure relates to a woven fabric that includes a plurality of warp fibers and weft fibers where each of the warp fibers or each of the weft fibers include alternating picks of expanded polytetrafluoroethylene (ePTFE) fibers having a substantially rectangular cross sectional configuration. The warp and the weft fibers that are not ePTFE fibers include non-ePTFE fibers. The ePTFE fibers may have an aspect ratio greater than about 1. The ePTFE fibers may have a pre-weaving density from about 0.1 g/cm$^3$ to about 1.0 g/cm$^3$ or from about 1.0 g/cm$^3$ to about 2.2 g/cm$^3$. The ePTFE fibers have a weight per length from about 20 dtex to about 1200 dtex and a tenacity greater than about 1.5 cN/dtex. The woven fabric has a dry time less than 30 mins, a vertical wicking of greater than 90 mm/10 mins, and weight per unit area of less than about 1000 g/m$^2$.

An embodiment of the invention relates to a knit fabric that includes (1) expanded polytetrafluoroethylene (ePTFE) fibers having a substantially rectangular configuration and a density greater than about 1.2 g/cm$^3$ and (2) knit fibers. The ePTFE fibers may have a pre-knitting density from about 0.1 g/cm$^3$ to about 1.0 g/cm$^3$ or from about 1.0 g/cm$^3$ to about 2.2 g/cm$^3$. The knit fabric has a vertical wicking of greater than 10 mm/10 mins and a weight per unit area of less than about 1000 g/m$^2$. The ePTFE fibers may be at least partially filled with an oil and/or a polymer. In at least one embodiment, at least of the knit fibers is a fire resistant fiber.

## BRIEF DESCRIPTION OF THE DRAWINGS

The accompanying drawings are included to provide a further understanding of the disclosure and are incorporated in and constitute a part of this specification, illustrate embodiments, and together with the description serve to explain the principles of the disclosure.

FIG. 1 is a scanning electron micrograph (SEM) of the top surface of an ePTFE fiber taken at 1000x magnification according to one exemplary embodiment of the invention;

FIG. 2 is scanning electron micrograph of the top surface of a 1x2 woven twill fabric with the fiber depicted in FIG. 1 inserted at every other weft pick taken at 80x magnification according to one embodiment of the invention.

FIG. 3 is a scanning electron micrograph of a cross-section of the woven fabric depicted in FIG. 2 taken at 120x magnification according to one embodiment of the invention;

FIG. 4 is scanning electron micrograph of the top surface of a 1x2 woven twill fabric with the fiber depicted in FIG. 1 inserted at every third weft pick taken at 80x magnification in accordance with one exemplary embodiment of the invention;

FIG. 5 is a scanning electron micrograph of a cross-section of the woven fabric depicted in FIG. 4 taken at 120x magnification according to one embodiment of the invention;

FIG. 6 is scanning electron micrograph of the top surface of a 1x2 woven twill fabric of polyamide fibers taken at 80x magnification according to at least one exemplary embodiment of the invention;

FIG. 7 is a scanning electron micrograph of a cross-section of the woven fabric depicted in FIG. 6 taken at 120x magnification according to one embodiment of the invention;

FIG. 8 is a scanning electron micrograph of the top surface of an **ePTFE** fiber taken at 1000x magnification according to one exemplary embodiment of the invention;

FIG. 9 is scanning electron micrograph of the top surface of a 1x2 woven twill fabric with the fiber depicted in FIG. 8 inserted at every other weft pick taken at 80x magnification in accordance with at least one exemplary embodiment of the invention;

FIG. 10 is a scanning electron micrograph of a cross-section of the woven fabric depicted in FIG. 9 taken at 120x magnification according to one embodiment of the invention;

FIG. 11 is scanning electron micrograph of the top surface of a 1x2 woven twill fabric with the fiber depicted in FIG. 8, twisted and inserted at every weft pick, taken at 80x magnification in accordance with at least one embodiment of the invention;

FIG. 12 is a scanning electron micrograph of a cross-section of the woven fabric depicted in FIG. 11 taken at 120x magnification according to one embodiment of the invention;

FIG. 13 is scanning electron micrograph of the top surface of a 1x2 woven twill fabric with the fiber depicted in FIG. 8, twisted and inserted at every weft pick, taken at 80x magnification according to one embodiment of the invention;

FIG. 14 is a scanning electron micrograph of a cross-section of the woven fabric depicted in FIG. 13 taken at 120x magnification in accordance with one exemplary embodiment of the invention;

FIG. 15 is scanning electron micrograph of the top surface of a 1x2 woven twill fabric with the fiber depicted in FIG. 8, twisted and inserted at every weft pick, taken at 80x magnification according to one embodiment of the invention;

FIG. 16 is a scanning electron micrograph of a cross-section of the woven fabric depicted in FIG. 15 taken at 120x magnification in accordance with at least one exemplary embodiment of the invention;

FIG. 17 is a scanning electron micrograph of the top surface of an **ePTFE** fiber taken at 1000x magnification according to one exemplary embodiment of the invention;

FIG. 18 is scanning electron micrograph of the top surface of a 1x2 woven twill fabric with the fiber depicted in FIG. 17 inserted at every other weft pick taken at 80x magnification according to one embodiment of the invention;

FIG. 19 is a scanning electron micrograph of a cross-section of the woven fabric depicted in FIG. 18 taken at 120x magnification in accordance with an exemplary embodiment of the invention;

FIG. 20 is scanning electron micrograph of the top surface of a 1x2 woven twill fabric with the fiber depicted in FIG. 8 inserted at every other weft pick taken at 80x magnification according to one embodiment of the invention;

FIG. 21 is a scanning electron micrograph of a cross-section of the woven fabric depicted in FIG. 20 taken at 120x magnification in accordance with an exemplary embodiment of the invention;

FIG. 22 is scanning electron micrograph of the top surface of a 1x2 woven twill fabric with a poly(vinylidene fluoride) (PVDF) fiber inserted at every other weft pick taken at 80x magnification according to one embodiment of the invention;

FIG. 23 is a scanning electron micrograph of a cross-section of the woven fabric depicted in FIG. 22 taken at 80x magnification in accordance with an exemplary embodiment of the invention;

FIG. 24 is scanning electron micrograph of the top surface of a 1x2 woven twill fabric with a polyether ether ketone (PEEK) fiber inserted at every other weft pick taken at 80x magnification according to one embodiment of the invention;

FIG. 25 is a scanning electron micrograph of a cross-section of the woven fabric depicted in FIG. 24 taken at 80x magnification in accordance with an exemplary embodiment of the invention;

FIG. 26 is scanning electron micrograph of the top surface of a 1x2 woven twill fabric with a polyphenylene sulfide (PPS) fiber inserted at every other weft pick taken at 80x magnification according to one embodiment of the invention;

FIG. 27 is a scanning electron micrograph of a cross-section of the woven fabric depicted in FIG. 26 taken at 80x magnification in accordance with an exemplary embodiment of the invention;

FIG. 28 is scanning electron micrograph of the top surface of a 1x2 woven twill fabric of polyamide/cotton fibers taken at 80x magnification according to one embodiment of the invention;

FIG. 29 is a scanning electron micrograph of a cross-section of the woven fabric depicted in FIG. 22 taken at 120x magnification in accordance with at least one exemplary embodiment of the invention;

FIG. 30 is scanning electron micrograph of the top surface of a 1x2 woven twill fabric with the fiber depicted in FIG. 8, twisted and inserted at every weft pick, taken at 80x magnification according to one embodiment of the invention;

FIG. 31 is a scanning electron micrograph of a cross-section of the woven fabric depicted in FIG. 30 taken at 120x magnification in accordance with at least one exemplary embodiment of the invention;

FIG. 32 is a scanning electron micrograph of the top surface of the expanded polytetrafluoroethylene (ePTFE) fiber of Example 4 taken at 1000x magnification;

FIG. 33 is a scanning electron micrograph of the top surface of the knitted fabric of Example 4 taken at 80x magnification;

FIG. 34 is scanning electron micrograph of the top surface of a plain woven fabric with the fiber depicted in FIG. 32, inserted at every weft pick, taken at 80x magnification according to one embodiment of the invention;

FIG. 35 is a scanning electron micrograph of a cross-section of the woven fabric depicted in FIG. 34 taken at 150x magnification in accordance with at least one exemplary embodiment of the invention;

FIG. 36 is a scanning electron micrograph of a cross-section of the woven fabric depicted in FIG. 34 laminated to a membrane taken at 120x magnification in accordance with at least one exemplary embodiment of the invention;

FIG. 37 is a scanning electron micrograph of the top surface of a plain woven fabric with the fiber depicted in FIG. 32, inserted at every other weft pick, taken at 80x magnification according to one embodiment of the invention;

FIG. 38 is a scanning electron micrograph of a cross-section of the woven fabric depicted in FIG. 37 taken at 150x magnification in accordance with at least one exemplary embodiment of the invention;

FIG. 39 is a scanning electron micrograph of a cross-section of the woven fabric depicted in FIG. 37 laminated to a membrane taken at 120x magnification in accordance with at least one exemplary embodiment of the invention;

FIG. 40 is scanning electron micrograph of the top surface of a plain woven fabric of polyamide taken at 80x magnification according to one embodiment of the invention;

FIG. 41 is a scanning electron micrograph of a cross-section of the woven fabric depicted in FIG. 40 taken at 150x magnification in accordance with at least one exemplary embodiment of the invention;

FIG. 42 is a scanning electron micrograph of a cross-section of the woven fabric depicted in FIG. 37 laminated to a membrane taken at 120x magnification in accordance with at least one exemplary embodiment of the invention;

FIG. 43 is scanning electron micrograph of the top surface of a 1x2 woven twill fabric with the fiber depicted in FIG. 32 inserted at every other weft pick taken at 80x magnification according to one embodiment of the invention; and

FIG. 44 is a scanning electron micrograph of a cross-section of the woven fabric depicted in FIG. 43 taken at 120x magnification in accordance with an exemplary embodiment of the invention.

## GLOSSARY

As used herein, the term "amorphously locked" is meant to denote that the polytetrafluoroethylene (PTFE) material has been heated above its crystalline melt temperature of the PTFE.

As used herein, the terms "fiber", "monofilament fiber" and "monofilament ePTFE fiber" are meant to describe an ePTFE fiber that is continuous or substantially continuous in nature which may be woven into a fabric.

The term "low density fiber" or "low density ePTFE fiber" as used herein are meant to describe fibers that have a pre-weaving density less than about 1.0 g/cm$^3$.

The term "conformable" and "conformable fiber" as used herein are meant to describe fibers that are capable of curling and/or folding upon themselves to conform to weave spacing provided between the crossovers of the warp and weft fibers and as determined by the number of picks per cm (inch) and/or ends per cm (inch) of the warp and weft fibers.

"High water entry pressure" as used herein is meant to describe a woven fabric with a water entry pressure greater than about 1 kPa.

"Microporous" is defined herein as having pores that are not visible to the naked eye.

As used herein, the terms "breathable" and "breathability" refer to ePTFE woven fabrics that have a moisture vapor transmission rate (MVTR) of at least about 3000 grams/m$^2$/24 hour.

The term "substantially rectangular configuration" as used herein is meant to denote that the conformable fibers have a rectangular or nearly rectangular cross section, with or without a rounded or pointed edge (or side) and an aspect ratio greater than 1.

The term "substantially round" as used herein is meant to denote that the ePTFE fibers have a round or nearly round configuration and an aspect ratio of the ePTFE fibers of about 1.

As used herein, the term "textile" is meant to denote any woven, nonwoven, felt, fleece, or knit and can be composed of natural and/or synthetic fiber materials and/or other fibers or flocking materials.

The terms "weave fiber" and "knit fiber" as used herein are meant to denote the fiber or fibers that are woven or knit with the ePTFE fiber to form a woven or knit fabric, respectively.

As used herein, the term "elastic" is meant to denote a material that can be tensioned and which returns to its approximate original dimensions upon release of the tension.

As used herein, the term "dry" is meant to denote dry weight at standard conditions.

The term "on" as used herein is meant to denote that when an element is "on" another element, it can be directly on the other element or intervening elements may also be present.

The terms "adjacent" and "adjacent to" as used herein are meant to denote that when an element is "adjacent" to another element, the element may be directly adjacent to the other element or intervening elements may be present.

## DETAILED DESCRIPTION

Persons skilled in the art will readily appreciate that various aspects of the present disclosure can be realized by any number of methods and apparatus configured to perform the intended functions. It should also be noted that the accompanying drawing figures referred to herein are not necessarily drawn to scale, but may be exaggerated to illustrate various aspects of the present disclosure, and in that regard, the drawing figures should not be construed as limiting.

The present invention relates to a woven or knit fabric that contains expanded polytetrafluoroethylene (ePTFE) fibers and at least one other fiber. In at least one embodiment, at least one other fiber is a non-ePTFE fiber. The ePTFE fiber may be woven or knit as a single fiber, as part of a multifilament fiber, or may be twisted or braided with another fiber. The fabrics concurrently possesses high moisture vapor transmission (i.e., highly breathable), are highly durable, are lightweight, and are fast drying. The woven or knit fabric can be colorized, such as, for example, by dyeing or printing. In addition, the fabrics are quiet, soft, and drapable, making it especially suitable for use in garments, tents, covers, bivy bags, footwear, and gloves. It is to be noted that the term "fabrics" is meant to include both woven and knit fabrics.

The ePTFE fibers used herein may have a pre-weaving or pre-knitting density from about 0.1 g/cm$^3$ to about 2.2 g/cm$^3$, from about 0.2 g/cm$^3$ to about 2.1 g/cm$^3$, from about 0.3 g/cm$^3$ to about 2.0 g/cm$^3$, or from about 0.4 g/cm$^3$ to about

1.9 g/cm$^3$. It is to be noted that processes used to make a fabric, such as weaving, may increase the density of the fibers. In at least one embodiment, the post-weaving density is greater than about 1.2 g/cm$^3$ and less than about 2.3 g/cm$^3$.

In one exemplary embodiment, the ePTFE fibers have a pre-weaving or pre-knitting density less than about 1.0 g/cm$^3$ and a node and fibril structure where the nodes are interconnected by fibrils, the space between which defines passageways through the fibers. Also, the conformable node and fibril fibers are microporous. The node and fibril structure within the fiber permits the fiber, and fabrics woven from the fiber, to be highly breathable and allow for the penetration of colorants and oleophobic compositions. The low density of the ePTFE fiber (both pre- and post-weave or knit) enhances the breathability of the fabrics made therewith. In one embodiment, the ePTFE fibers have a pre-weaving or pre-knitting density less than about 0.9 g/cm$^3$, less than about 0.8 g/cm$^3$, less than about 0.7 g/cm$^3$, less than about 0.6 g/cm$^3$, less than about 0.5 g/cm$^3$, less than about 0.4 g/cm$^3$, less than about 0.3 g/cm$^3$, less than about 0.2 g/cm$^3$, or less than about 0.1 g/cm$^3$. One non-limiting example of such a conformable, breathable, microporous fiber is an ePTFE fiber that has a pre-weaving density less than about 1.0 g/cm$^3$ taught in U.S. Patent Publication No. 2015/0079865 to Minor, et al. Other non-limiting examples of suitable low density ePTFE fibers include those fibers made in accordance with the teachings of U.S. Patent No. 7,060,354 to Baille, et al., U.S. Patent Publication No. 2014/0120286 to Wendlandt et al., and U.S. Patent No. 8,187,733 to Kelmartin, et al.

Also, the matrix provided by the nodes and fibrils in the low density ePTFE fibers (e.g., density less than about 1.0 g/cm$^3$) allows for the inclusion of desired fillers and/or additives. For example, the ePTFE fiber may be filled or partially filled with an oil and/or another polymer. Such additives essentially fill the spaces provided by the nodes and fibrils and prevents the passage of liquid water; however, in some instances, water vapor is able to pass through the filled fiber. Some additives and/or fillers may include a functionality to impart a desired feature, such as, but not limited to, anti-microbial, anti-fungal, insect repellence, or contamination resistance to the fiber. The ePTFE fibers include at least one of an additive and/or filler to render the ePTFE fiber hydrophilic. The filled low density ePTFE fiber functions similar to a high density ePTFE fiber (e.g., density greater than about 1.0 g/cm$^3$) in that it is essentially non-water absorptive.

In another embodiment, the ePTFE fibers have a pre-weaving or pre-knitting density greater than about 1.0 g/cm$^3$ and have essentially no node and fibril structure (e.g., high density ePTFE fibers). In exemplary embodiments, the ePTFE fibers have a density greater than about 1.1 g/cm$^3$, greater than about 1.2 g/cm$^3$, greater than about 1.4 g/cm$^3$, greater than about 1.5 g/cm$^3$, greater than about 1.7 g/cm$^3$, or greater than about 1.9 g/cm$^3$. In some embodiments, the ePTFE fibers have a density from about 1.0 g/cm$^3$ to about 2.2 g/cm$^3$. In the dense ePTFE fibers, the fibrils are mostly collapsed, making the fiber non-breathable. In addition, dense ePTFE fibers have a high tensile strength and a small profile (cross-section area). In fabrics where the dense ePTFE fibers are utilized, breathability of the fabric is due to spaces between the warp and weft fibers.

It is to be appreciated that with respect to the ePTFE fibers; reference is made herein with respect to expanded polytetrafluorethylene fibers for ease of discussion. However, it is to be understood that any suitable conformable fluoropolymer may be used interchangeably with ePTFE as described within this application in examples that do not fall within the scope of the appended claims. Non-limiting examples of fluoropolymers include, but are not limited to, expanded PTFE, expanded modified PTFE, expanded copolymers of PTFE, fluorinated ethylene propylene (FEP), and perfluoroalkoxy copolymer resin (PFA). Patents have been granted on expandable blends of PTFE, expandable modified PTFE, and expanded copolymers of PTFE, such as, but not limited to, U.S. Patent No. 5,708,044 to Branca; U.S. Patent No. 6,541,589 to Baillie; U.S. Patent No. 7,531,611 to Sabol et al.; U.S. Patent No. 8,637,144 to Ford; and U.S. Patent Application No. 12/410,050 to Xu et al.

In one or more embodiment, the woven or knit fabrics may include one or more of the following materials: ultra-high molecular weight polyethylene as taught in U.S. Patent Publication No. 2014/0212612 to Sbriglia; polyparaxylylene as taught in U.S. Provisional Application No. 62/030,419 to Sbriglia; polylactic acid as taught in U.S. Provisional Patent Application No. 62/030,408 to Sbriglia, et al.; and/or VDF-co-(TFE or TrFE) polymers as taught in U.S. Provisional Patent Application No. 62/030,442 to Sbriglia.

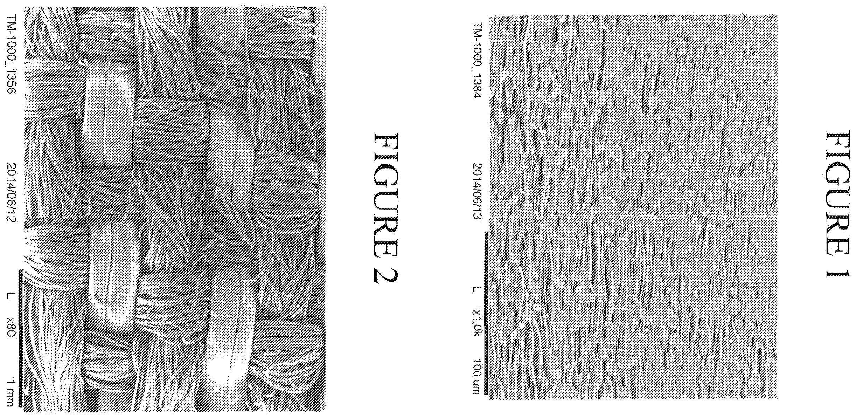

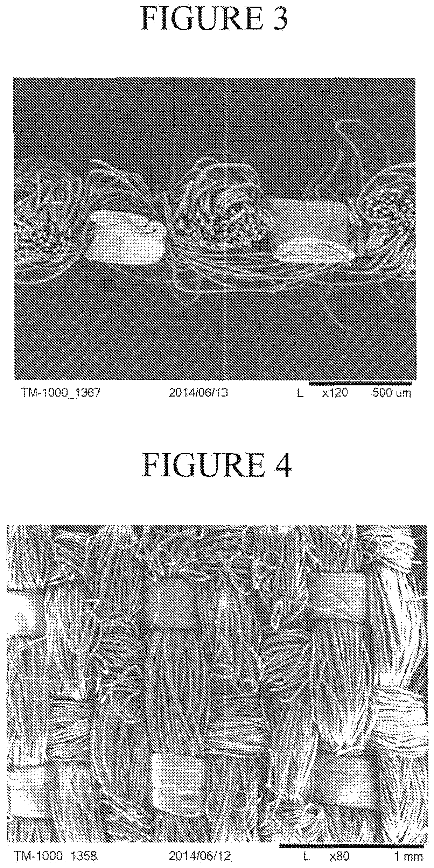

Additionally, the ePTFE fibers have a substantially rectangular configuration. At least FIGS. 2 and 4 of this application depict exemplary ePTFE fibers having substantially rectangular configurations. As used herein, the term "substantially rectangular configuration" is meant to denote that the fibers have a rectangular or nearly rectangular cross section. That is, the ePTFE fibers have a width that is greater than its height (thickness). It is to be noted that the fibers may have a rounded or pointed edge (or side). Unlike conventional fibers that must be twisted prior to weaving, the ePTFE fibers can be woven or knit while in a flat state without having to first twist the ePTFE fiber. The ePTFE fibers may be advantageously woven with the width of the fiber oriented so that it forms the top surface of the woven fabric. Thus, woven fabrics constructed from the ePTFE fibers may have a flat or substantially flat weave and a corresponding smooth surface. The smooth, planar surface of the fabric enhances the softness of the woven fabric. In exemplary embodiments, the aspect ratio (i.e., width to height ratio) of the ePTFE fibers is greater than 1. In some embodiments, the aspect ratio is greater than about 2, greater than about 5, greater than about 10, greater than about 15, greater than about 20, or greater than about 25. A high aspect ratio, such as is achieved by the ePTFE fibers, enables low weight per area fabrics, easier and more efficient reshaping, and can achieve higher coverage in a woven or knitted fabric.

In at least one embodiment, the ePTFE fiber may have a substantially round configuration. As used herein, the term "substantially round" is meant to denote that the fiber has a round (e.g., circular) or nearly round configuration and an aspect ratio of about 1.

Additionally, the ePTFE fibers (pre- or post- weaving or knitting) have a tenacity greater than about 1.5 cN/dtex. In at least one embodiment of the invention, the ePTFE fibers have a tenacity from about 1.5 cN/dtex to about 7 cN/dtex, from about 2 cN/dtex to about 6 cN/dtex, or from about 2.5 cN/dtex to about 5 cN/dtex. Further, the ePTFE fibers have a fiber break strength (pre- or post- weaving or knitting) of at least about 2 N. In one or more embodiments, the ePTFE fibers have a fiber break strength from about 2 N to about 20 N, from about 3 N to about 19 N, from about 4 N to about 18 N, or from about 5 N to about 17 N.

Additionally, the fibers (pre- or post- weaving or knitting) may have a weight per length of about 20 dtex to about 1200 dtex, from about 30 dtex to about 1000 dtex, from about 40 dtex to about 500 dtex, from about 50 dtex to about 450 dtex, from about 100 dtex to about 400 dtex, or from about 150 dtex to about 300 dtex. It is to be appreciated that a lower dtex provides a lower weight/area fabric, which enhances the comfort of a garment formed from the fabric. In addition, the low denier of the ePTFE fiber enables the woven fabric to have a high pick resistance. Pick resistance is referred to as the ability of a fabric to resist the grasping and moving of individual fibers within the fabric. In general, the finer the fiber (e.g., lower denier or dtex) and tighter the weave, a better pick resistance is achieved.

The ePTFE fibers also have a height (thickness) (pre- or post- weaving or knitting) less than about 500 microns. In some embodiments, the thickness ranges from about 10 microns to about 500 microns, from 15 microns to about 250 microns, from about 20 microns to about 150 microns, from about 25 microns to 100 microns, from about 30 microns to 80 microns, or from about 35 microns to 50 microns. The ePTFE fibers may have a pre- or post- weaving or knitting height (thickness) less than 500 microns, less than 400 microns, less than 300 microns, less then 200 microns, less then 100 microns, or less than 50 microns. The ePTFE fibers also have a width (pre- or post- weaving or knitting) that is less than about 4.0 mm.

In at least one exemplary embodiment, the fibers have a pre- or post-weaving or knitting width from about 0.05 mm to about 4.0 mm, from about 0.1 mm to about 3.0 mm, from about 0.3 mm to about 2.0 mm, or from about 0.5 mm to about 1.5 mm. The resulting aspect ratio (i.e., width to height ratio) of the ePTFE fibers is greater than about 1. In some embodiments, the aspect ratio is greater than about 2, greater than about 5, greater than about 10, greater than about 15, greater than about 20, or greater than about 25. A high aspect ratio, such as is achieved by the ePTFE fibers, enables low weight per area fabrics, easier and more efficient reshaping, and can achieve higher coverage in a woven fabric with less picks and ends per inch.

The ePTFE fibers may have a small cross-section compared to conventional fibers. Thus, when the ePTFE fiber is woven with another fiber, the resulting woven fabric may have a topography where the ePTFE fiber is positioned below the surface of the woven fabric, and in some instances, may not be visible to the naked eye. Such a weave construction enhances the skin sensoric of the fabric when sweating or wet.

In another embodiment, the ePTFE fiber is woven with another fiber such that the ePTFE fiber is positioned near or on the surface of the woven fabric. It was discovered that such an ePTFE woven fabric had an improved beading performance over conventional, non ePTFE fabrics. The beading performance of this ePTFE woven fabric may range from about 50% to about 70%, from about 70% to about 80%, or from about 80% to about 90%. With the addition of a water repellent treatment, the beading performance of the ePTFE woven fabric is about 100%. Unlike conventional non-ePTFE fabrics, the beading performance of the woven ePTFE fabric does not degrade over time to zero%. It was determined that the beading performance did not degrade over time to an amount below the initial beading performance of the fabric. It is to be appreciated that with no water repellent treatment, the beading performance of such an ePTFE woven fabric remains at its initial beading performance over time.

The ePTFE fiber, when loosely woven with at least one other fiber, may include visible gaps between the intersections of the warp and weft fibers. As such, the fabric is highly breathable but is not water resistant. Such large gaps in the fabric may be acceptable in applications where, for example, the water resistance is to be provided by another layer or in situations where general areal coverage is desired and water resistance is not critical.

In other embodiments, the ePTFE fiber is more tightly woven with the other fiber(s), such as when the width of the ePTFE fiber exceeds the allotted space in the woven fabric based on the number of picks per cm (inch) and/or ends per cm (inch). In such a fabric, there is no, or substantially no, gaps between the intersections of the warp and weft fibers. The width of the ePTFE fiber may be greater than 1 times, greater than about 1.5 times, greater than about 2 times, greater than about 3 times, greater than about 4 times, greater than about 4.5 times, greater than about 5 times, greater than about 5.5 times, or greater than about 6 times (or more) the space provided to the fibers based on the number of picks per inch and/or ends per inch. In other words, the ePTFE fibers may be woven tighter than the width of the ePTFE fiber. In such embodiments, the ePTFE fibers begin the weaving process in a substantially rectangular configuration. However, due to the larger size of the fiber compared to the space provided by the picks per inch and/or ends per inch, the ePTFE fibers may curl and/or fold upon themselves to conform to the weave spacing determined by the number of picks per inch and/or ends per inch of the warp and weft fibers. Generally, the folding or curling occurs in the width of the fiber such that the width of each individual fiber becomes smaller as the folding or curling of the fiber occurs. The fibers are thus in a folded configuration along a length of the fiber.

The conformability of the ePTFE fiber allows larger sized ePTFE fibers to be utilized in smaller weave spacing. Increasing the number of picks per inch and/or ends per inch compared to the width of the fiber reduces or even eliminates gaps between where the warp and weft fibers intersect. Such tightly woven fabrics are concurrently highly breathable and water resistant (e.g., have a high water entry pressure). In embodiments where the ePTFE fiber has a node and fibril structure (such as in a low density ePTFE fiber), the fabric breathes not only through whatever gap may be present but also through the ePTFE fiber itself. Thus, even when there are no gaps present, the woven fabric containing the low density ePTFE fiber remains breathable.

The ePTFE fibers described herein, along with one or more other weave fiber, may be used to form a woven fabric having warp and weft fibers interwoven with one another in a repeating weave pattern. Any weave pattern, such as, but not limited to, plain weaves, satin weaves, twill weaves, and basket weaves, may be used to form the ePTFE fibers and other fiber(s) into a woven fabric. The weave fiber may be smooth or have a textured surface. Suitable fibers for use as the weave fiber(s) include, but are not limited to rayon, polyester, polyethylene, polypropylene, cotton, wool, silk, aramid, polyamide, acrylic, olefin, spandex, and combination and blends thereof. The weave fiber(s) may be selected depending on the desired performance properties of the woven fabric. It is to be appreciated that the inclusion of one or more elastic or otherwise stretchable fiber as the weave fiber will allow the woven fabric to stretch and then recover or substantially recover to its original shape. Non-limiting examples of elastic fibers for use in the woven fabric include elastane or nylon (e.g., textured nylon).

The ePTFE fiber may be woven as a single fiber and may be woven flat, as discussed above, or twisted prior to weaving. In addition, the ePTFE fiber may be woven as multiple ePTFE fibers where two or more ePTFE fibers are positioned adjacent to or alongside of each other and are treated as a single weaving fiber. Alternatively, multiple ePTFE fibers may be twisted or braided together and treated as a single weaving fiber. These ePTFE fibers may be woven with one or more weave fiber to form a woven fabric.

Alternatively, one or more weave fiber may be combined with the ePTFE fiber and woven into a fabric. For example, one or more weave fiber may be wrapped around the ePTFE fiber (or vice versa) and woven into a fabric. In another embodiment, the ePTFE fibers may be wrapped about the weave fibers so as to encapsulate the weave fibers in a core/sheath configuration (or vice versa). The ePTFE fiber may also be twisted or braided with one or more weave fiber prior to weaving.

The ePTFE fiber, whether alone or in combination with a weave fiber(s), may be utilized in either the warp and/or the weft direction. It is to be appreciated that any number of variations of weave patterns where the ePTFE fiber and/or weave fiber are used in the warp and weft directions. The ePTFE fiber may be used solely in the warp or weft direction or in the warp and the weft direction and may be alternated by weave fiber(s) or the weave fiber(s) may be inserted at a predetermined interval, such as, for example, every other pick, every third pick, every fourth pick, etc. The ePTFE fiber may alternatively be present in both the warp and weft direction at predetermined intervals. As one non-limiting example, the warp fibers may be formed of polyamide fibers and the weft fibers may be formed of polyamide fibers and the ePTFE fiber in alternating picks. In another non-limiting example, the entire weft direction may be composed of ePTFE fibers and the warp fibers may be composed of polyamide fibers.

In another embodiment, the ePTFE fibers, in combination with a knit fiber, may be knit into a knit fabric. Suitable fibers for use as the knit fiber(s) include, but are not limited to rayon, polyester, polyethylene, polypropylene, cotton, wool, silk, aramid, polyamide, acrylic, olefin, spandex, and combination and blends thereof. As discussed above, the non-ePTFE fiber(s) may be selected depending on the desired performance properties of the knit fabric. It is to be appreciated that the inclusion of one or more elastic or otherwise stretchable fiber as the knit fiber will allow the knit fabric to stretch and then recover or substantially recover to its original shape. Non-limiting examples of elastic or stretchable fibers for use in the knit fabric include elastane or nylon (e.g., textured nylon).

The ePTFE fiber, together with the knit fiber, may be knit utilizing any knit pattern, such as, but not limited to, warp knits, weft knits, circular knits, plain knits, fleece knits, fuzzy knits, waffle knits, jersey knits, and an intimate blend knit. The ePTFE fiber may be positioned adjacent to or alongside the non-ePTFE fiber and treated as a single knit fiber. Alternatively, the knit fiber may be wrapped around the ePTFE fiber (or vice versa) and knit into a knitted fabric. In another embodiment, the ePTFE fibers and non-ePTFE fibers may be twisted or braided together and treated as a single knit fiber. In a further embodiment, the ePTFE fibers may be wrapped about the non-ePTFE fibers so as to encapsulate the non-ePTFE fiber in a core/sheath configuration (or vice versa).

In some embodiments, it may be desirable to impart flame resistance to the woven or knit fabric. In such an embodiment, a fire retarding fiber may be employed as at least one of the weave or knit fibers. Non-limiting examples of aramids, flame resistant cottons, polybenzimidazole (PBI®), polybenzoxazole (PBO), flame resistant rayon, modacrylic blends, carbon, fiberglass, polyacrylonitrile (PAN), and combinations and blends thereof. The ePTFE fabric exhibits no vertical flame or melt or drip characteristics when tested in accordance with the Vertical Flame Test described herein.

The ePTFE fibers restrict the entry of water into the fiber structure, thus eliminating problems associated with conventional woven fabrics that absorb water, which, in turn, makes the fabrics heavier, and permits for thermal conductivity of the temperature of the water through the fabric. Such thermal conductivity may be detrimental in cases where the wearer is in a cold environment and the cold is transported to the body of the wearer. In addition, the less water that is picked up by the fabric reduces the amount of time needed for the fabric to dry. As used herein, the term "dry" is meant to denote dry weight at standard conditions (i.e., $65\pm2\%$ relative humidity (RH) and $21\pm1°C$ ($70\pm2°F$)). In many environments, it is desirable to have the garment dry as quickly as possible. The ePTFE fabric exhibits a dry time of less than 30 min, less than 25 min, or less than 20 min.

Further, without a hydrophobic treatment imparted to the fabric, woven fabrics exhibits a vertical wicking of greater than 90 mm in 10 mins, greater than 100 mm in 10 mins, or greater than 110 mm in 10 mins. Knit fabrics exhibit a vertical wicking of greater than 10 mm in 10 mins. A fabric with a high amount of wicking is especially desirable in hot, humid conditions where an individual perspires. Wicking permits the perspiration to enter the woven or knit fabric and away from the skin, thereby enhancing the comfort of the wearer of the garment. It is desirable that the fabric have both a high vertical wicking to move the water away from the skin and fast dry time to remove the water from the fabric itself. Although these features are competing factors, the ePTFE woven and knit fabrics achieve both high wicking (e.g., greater than or equal to about 90 mins) and a fast dry time (e.g., less than 30 minutes).

The ePTFE woven and knit fabrics have a moisture vapor transmission rate (MVTR) that is greater than about 3000 $g/m^2/24$ hours, greater than about 5000 $g/m^2/24$ hours, greater than about 8000 $g/m^2/24$ hours, greater than about 10000 $g/m^2/24$ hours, greater than about 12000 $g/m^2/24$ hours, greater than about 15000 $g/m^2/24$ hours, greater than about 20000 $g/m^2/24$ hours, or greater than about 25000 $g/m^2/24$ hours when tested according to the moisture vapor transmission rate (MVTR) Test Method described herein. As used herein, the term "breathable" or "breathability" refers to woven fabrics or laminates that have a moisture vapor transmission rate (MVTR) of at least about 3000 grams/$m^2/24$ hours. Moisture vapor transmission, or breathability, provides cooling to a wearer of a garment, for example, made from the fabric.

The woven and knit fabrics also have an air permeability that is less than about 1000 cfm, less than about 500 cfm, less than about 300 cfm, less than 100 cfm, less than about 70 cfm, less than about 50 cfm, less than about 25 cfm, less than about 20 cfm, less than about 15 cfm, less than about 10 cfm, less than about 5 cfm, and even less than about 3 cfm.. It is to be understood that low air permeability correlates to improved windproofness of the fabric. It is to be noted that air permeability may be an enhanceable feature, especially in knits where air permeability may be desired.

Additionally, the woven and knit fabrics are lightweight, which permits the end user to easily carry and/or transport articles formed from the woven fabrics. The woven fabrics may have a weight per unit area of less than about 1000 $g/m^2$, less than about 500 $g/m^2$, less than about 400 $g/m^2$, less than about 300 $g/m^2$, less than about 200 $g/m^2$, less than about 150 $g/m^2$, or less than about 100 $g/m^2$. The light weight contributes to the overall comfort of the wearer of the garment, especially during movement of the wearer as the wearer experiences less restriction to movement.

Further, when utilizing monofilament ePTFE, it was surprising to find the woven and knit fabrics have a soft hand and are drapable, making them suitable for use in garments. The fabrics have an average stiffness less than about 1000 g, less than about 500 g, less than about 400 g, less than about 300 g, less than about 250 g, less than about 200 g, less than about 150 g, less than about 100 g, and even less than about 50 g. It was surprisingly discovered that in addition to a soft hand, the woven fabrics demonstrated a reduction in noise associated with bending or folding the woven fabric. It was further discovered that even with the addition of a porous polymer membrane, as discussed hereafter, the noise was reduced, particularly when compared to conventional ePTFE laminates.

The woven and knit fabrics are also resistant to tearing. For example, the woven fabric has a tear strength from about 10 N to about 200 N (or even greater), from about 15 N to about 150 N, or from about 20 N to about 100 N as measured by the Elemendorf Tear test described herein. It was discovered that the ePTFE fabrics had an improved tear strength over conventional, non ePTFE fabrics. ePTFE blended woven fabrics described herein also have a break strength from about 100 N to about 1500 N (or even greater), from about 300 N to about 1000 N, or from about 500 N to about 750 N as measured by the Fabric Break Strength test set forth herein. Such high tear strengths and break strengths enable the woven fabric to be more durable in use.

Treatments may be provided to impart one or more desired functionality, such as, but not limited to, oleophobicity to the fabrics. Coatings or treatments, such as a fluoroacrylate coating, may be applied to one or both sides of the woven or knit fabric, and may penetrate through or only partially through the woven or knit fabric. It is to be understood that any functional protective layer, functional coating, or functional membrane, such as, but not limited to, polyamides, polyesters, polyurethanes, cellophane, non-fluoropolymer membranes that are both waterproof and breathable may be attached or otherwise affixed or layered on the woven or knit fabric.

The fabrics may be colored by a suitable colorant composition. In one embodiment, the ePTFE fiber has a microstructure where the pores of the ePTFE fiber are sufficiently tight so as to provide water resistance and sufficiently open to provide properties such as moisture vapor transmission and penetration by coatings of colorants. In one embodiment, the ePTFE fiber has a surface that, when printed, provides a durable aesthetic. Aesthetic durability can be achieved in some embodiments with colorant coating compositions that comprise a pigment having a particle size that is sufficiently small to fit within the pores of the ePTFE fiber and/or within the woven fabric. Multiple colors may be applied using multiple pigments, by varying the concentrations of one or more pigments, or by a combination of these techniques. Additionally, the coating composition may be applied in any form, such as a solid, pattern, or print. A coating composition can be applied to the woven or knit fabric by conventional printing methods. Application methods for colorizing include but are not limited to, transfer coating, screen printing, gravure printing, inkjet printing, and knife coating. In some embodiments, the ePTFE fiber remains uncolored while the weave fiber(s) in the woven fabric are colored by the colorant composition. Other coatings or treatments may be applied, such as, for example, to make the fabric UV stable, anti-microbial, anti-fungal, contamination resistant, etc.

In at least one embodiment, a porous or microporous polymer membrane is laminated or bonded to the woven or knit fabric. Non-limiting examples of porous membranes including expanded PTFE, expanded modified PTFE, expanded copolymers of PTFE, fluorinated ethylene propylene (FEP), and perfluoroalkoxy copolymer resin (PFA). Polymeric materials such as polyolefins (e.g., polypropylene and polyethylene), polyurethanes, and polyesters are considered to be within the purview of the invention provided that the polymeric material can be processed to form porous or microporous membrane structures. It is to be appreciated that even when the inventive woven fabric is laminated or bonded to a porous or microporous membrane, the resulting laminate remains highly breathable and substantially maintains the breathability of the woven fabric. In other words, the porous or microporous membrane laminated to the woven fabric does not affect, or only minimally affects, the breathability of the woven or knit fabric, even when laminated.

The microporous membrane may be an asymmetric membrane. As used herein, "asymmetric" is meant to indicate that the membrane structure includes multiple layers of ePTFE within the membrane where at least one layer within the membrane has a microstructure that is different from the microstructure of a second layer within the membrane. The difference between the first microstructure and the second microstructure may be caused by, for example, a difference in pore size, a difference in node and/or fibril geometry or size, and/or a difference in density.

In a further embodiment, a textile may be attached to the microporous membrane or directly to the ePTFE fabric. As used herein, the term "textile" is meant to denote any woven, nonwoven, felt, fleece, or knit and can be composed of natural and/or synthetic fiber materials and/or other fibers or flocking materials. For example, the textile may be comprised of materials such as, but not limited to cotton, rayon, nylon, polyester, and blends thereof. The weight of the material forming the textile is not particularly limited except as required by the application. In exemplary embodiments, the textile is air permeable and breathable.

Any suitable process for joining the membrane and/or the textile to the woven or knit fabric (and textile to the membrane) may be used, such as gravure lamination, fusion bonding, spray adhesive bonding, and the like. The adhesive may be applied discontinuously or continuously, provided that breathability through the laminate is maintained. For example, the adhesive may be applied in the form of discontinuous attachments, such as by discrete dots or grid pattern, or in the form of an adhesive web to adhere layers of the laminate together.

The ePTFE woven and knit fabrics are suitable for use in various applications, including but not limited to garments, tents, covers, bivy bags, footwear, gloves, and the like. The fabrics are concurrently highly breathable, highly durable, lightweight, and fast drying. The ePTFE fiber may be woven as a single fiber, as part of a multifilament fiber, or may be twisted or braided with another fiber to form a woven or knit fabric. The ePTFE fabrics can be used alone, or it can be used in conjunction with a fluoropolymer membrane and/or textile. The surface of the ePTFE fabrics can be colorized, for example, by printing.

Although the present disclosure relates generally herein to ePTFE fibers, it is to be appreciated that non-ePTFE fibers such as, but not limited to, polyether ether ketone (PEEK), poly(vinylidene fluoride) (PVDF), polyphenylene sulfide (PPS), high molecular weight polyethylene, polyethylene, polyamide, polyimide, polyolefin, and polyester fibers may be utilized alone, or in conjunction with another fiber, to form a woven or knit fabric not falling within the scope of the claimed invention. For instance, PEEK, PVDF, and PPS fibers are monofilament fibers and may have a substantially rectangular or substantially round (circular) configuration. A substantially round PVDF fiber, for example, when woven or knit into a fabric, advantageously picks up little to no water into the fiber, and subsequently, little or no water into the fabric. The non-ePTFE fibers may be woven or knit in conjunction with other non-ePTFE fibers or with monofilament PTFE fibers to form woven or knit fabrics.

Persons skilled in the art will readily appreciate that various aspects of the present disclosure can be realized by any number of methods and apparatus configured to perform the intended functions. It should also be noted that the accompanying drawing figures referred to herein are not necessarily drawn to scale, but may be exaggerated to illustrate various aspects of the present disclosure, and in that regard, the drawing figures should not be construed as limiting.

**TEST METHODS**

It should be understood that although certain methods and equipment are described below, other methods or equipment determined suitable by one of ordinary skill in the art may be alternatively utilized.

**Fiber Weight per Length**

A 45 meter length of fiber was obtained using a skein reel. The 45 meter length was then weighed on a scale with precision to 0.0001 grams. This weight was then multiplied by 200 to give the weight per length in terms of denier (g/9000m). Three measurements were taken and averaged.

**Fiber Width**

Fiber width was measured in a conventional manner utilizing a 10x eye loop having gradations to the nearest 0.1 mm. Three measurements were taken and averaged to determine the width to the nearest 0.05 mm.

**Fiber Thickness**

Fiber thickness was measured utilizing a snap gauge accurate to the nearest 0.0001 inch. Care was taken to not to compress the fibers with the snap gauge. Three measurements were taken and averaged and then converted to the nearest 0.0001 mm.

**Fiber Density**

Fiber density was calculated utilizing the previously measured fiber weight per length, fiber width and fiber thickness using the following formula:

$$\text{Fiber Density (g/cm}^3\text{)} = \frac{\text{Fiber wt per length (dtex)}}{\text{Fiber Width (mm)} * \text{Fiber Thickness (mm)} * 10,000}$$

**Fiber Break Strength**

The fiber break strength was the measurement of the maximum load needed to break (rupture) the fiber. The break strength was measured by a tensile tester, such as an Instron® Machine of Canton, MA. The Instron® machine was outfitted with fiber (horn type) jaws that are suitable for securing fibers and strand goods during the measurement of tensile loading. The cross-head speed of the tensile tester was 25.4 cm per minute. The gauge length was 25.4 cm. Five measurements of each fiber type were taken with the average reported in units of Newtons.

**Fiber Tenacity**

Fiber tenacity is the break strength of the fiber normalized to the weight per length of the fiber. Fiber tenacity was calculated using the following formula:

$$\text{Fiber tenacity (cN/dtex)} = \frac{\text{Fiber break strength (N)} * 100}{\text{Fiber weight per length (dtex)}}$$

Mass/Area

In order to measure mass per area, fabric samples were prepared having an area of at least 100 cm$^2$. A Karl Schroder 100 cm$^2$ circle cutter may be used. Each sample was weighed using a Mettler Toledo Scale Model AB204. The scale was recalibrated prior to weighing specimens, and the results were reported in grams per square meter (g/m$^3$). Three samples were taken per specimen and the average was reported.

**SEM Sample Preparation Method**

Cross-section SEM samples were prepared by spraying them with liquid nitrogen and then cutting the sprayed samples with a diamond knife in a Leica ultracut UCT, available from Leica Microsystems, Wetzlar, Germany.

**Fabric Tear Strength**

This test is designed to determine the average force required to propagate a single-rip tongue-type tear starting from a cut in woven fabric. A Thwing-Albert Heavy Duty Elmendorf Tearing Tester (MAI227) was used. The instrument was calibrated and the correct pendulum weight was selected. The pendulum was raised to the starting position. The specimen was placed in jaws and clamped. The specimen was centered with the bottom edge carefully against the stops. The upper area of the specimen was directed towards the pendulum to ensure a shearing action. The test was performed until a complete tear was achieved. The digital readout was recorded in Newtons. This was repeated until a set (3 warp and 3 weft) was completed. The reported results are the average of the measurements for each the warp and weft direction.

**Fabric Break Strength**

This test was performed in accordance with the general teachings of ASTM D 751. 5 warp and 5 fill specimens with dimensions as 10.16x15.24 cm (4"x6") were cut, with the long dimension parallel to the test direction. The specimens were conditioned at 21.11 plus minus 1.11°C (70 plus minus 2°F) 65±2% RH prior to testing for at least 1 hour. Next, a template of 3.81 x 15.24 (1.5"x6") was obtained and aligned with the 15.24 cm (6") edge of the sample. A thin guideline was drawn (at the **3.81** cm (1.5") side) along the fabric down the full length of the specimen. This line must be as accurate as possible and parallel to the lengthwise fibers. The intent of these lines is to ensure that the center portion of the specimen is tested and that the specimen is properly aligned with the jaws for the warp and fill fibers. This is important in order to obtain the true specimen performance. An Instron Model 5565 was calibrated and a 453.59 kg (1000 lb) load cell was installed. The 2.54 x2.54 cm (1"x1") rubber jaws were placed on the same side of the top and bottom grips and the 12.5 cm x 7.62 cm (1"x3") rubber jaws were placed on the other side of the top and bottom grips (the 2.54 cm x2.54 cm (1"x1") jaw should clamp to a 2.54cm x 7.62cm (1"x3") jaw). The gage length was set to 7.62 cm (3"). The specimen was placed between the open jaws, aligning the reference line with the outer edge of both the top and the bottom 2.54 cm x 2.54 cm (1"x1") jaws. The top jaw was closed by using a pneumatic foot pedal. The specimen was allowed to hang freely and the bottom jaw was closed by pushing down another click on the foot pedal. The load cell was balanced. Then, the test was started by pressing start on the control panel. If slippage of the specimen in the jaws was observed, the data was disregarded and re-cut and retested. If specimen breaks in the jaw were observed, the data was disregarded and re-cut and retested. If breaks at the edge of the jaw were observed, it was checked to see if the majority of specimen breaks are near the edge of the jaw because the jaws are preventing the specimen from contracting in width as the force is applied; if so then, "jaw breaks" are a characteristic of the material and no retests are necessary. These steps were repeated 5 times for each of the warp and fill specimens and the average maximum force at break was reported for each direction.

Fabric Stiffness

A Thwing Albert Handle-O-Meter with a 1000g beam and 0.635 cm (1/4") slot width was used to measure the hand (stiffness). A 10.16 cm x 10.16 cm (4" x4") sample was cut from the fabric. The specimen was placed face up on the specimen platform. The specimen was lined up so that the test direction was perpendicular to the slot to test the warp direction. The START/Test button was pressed until a click is heard, then released. The number appearing on the digital display after a second click is heard was recorded. The reading does not return to zero, it indicates the peak reading of each individual test. The specimen was turned over and tested again, recording the number. Then the specimen was turned 90 degrees to test the fill direction, recording the number. Finally, the specimen was turned over and tested again, recording the number. The 4 recorded numbers were added together (1 Warp Face, 1 Warp Back, 1 Fill face, 1 Fill Back) to calculate the overall stiffness of the specimen in grams. The results were reported for one sample.

**Air Permeability** - **Frazier Number Method**

Air permeability was measured by clamping a test sample in a gasketed flanged fixture which provided a circular area of approximately 6 square inches (2.75 inches (7 cm) diameter) for air flow measurement. The upstream side of the sample fixture was connected to a flow meter in line with a source of dry compressed air. The downstream side of the sample fixture was open to the atmosphere.
Testing was accomplished by applying a pressure of 0.5 inches of water to the upstream side of the sample and recording the flow rate of the air passing through the in-line flowmeter (a ball-float rotameter).
The sample was conditioned at 70°F (21.1 °C) and 65% relative humidity for at least 4 hours prior to testing.
Results were reported in terms of Frazier Number which is air flow in cubic feet/minute/square foot of sample at 0.5 inches water pressure. N=3.

## Moisture Vapor Transmission Rate Test - (MVTR)

The MVTR for each sample fabric was determined in accordance with the general teachings of ISO 15496 except that the sample water vapor transmission (WVP) was converted into MVTR moisture vapor transmission rate (MVTR) based on the apparatus water vapor transmission (WVPapp) and using the following conversion.

$$\text{MVTR} = (\text{Delta P value} * 24) / ( (1/\text{WVP}) + (1 + \text{WVPapp value}) )$$

To ensure comparable results, the specimens were conditioned at 73.4 ± 0.4°F (23°C) and 50 ± 2% rH for 2 hrs prior to testing and the bath water was a constant 73.4°F ± 0.4°F (23°C).
The MVTR for each sample was measured once, and the results are reported as g/m$^2$/24 hours.

## Vertical Wicking:

One 500 ml Erlemeyer flasks was filled with 200 ml of water colored with any color of suitable to make water level visible on the sample. Two 15.24 cm x 2.54 cm (6" x1")" strips (the 6" length is cut in the warp direction) were cut from the sample fabric. The top edge of the strip (approximately 1/8" - 1/4" from top) was pierced with a long straight pin (the pin shall be parallel with the 1" edge. The strip was suspended from the pin in the flask filled with 200ml of colored water (the pin rested on the edges of the flask opening). After 10 minutes, the strip was removed from the flask and the water level was measured on the strip (in mm) and recorded. This procedure was used to determine the rate at which water wicks test samples suspended in water. N=2

## Weight Gain and Drying Time

Fabric samples and blotting paper were conditioned at 65±2% RH and 21±1°C (70±2°F) for a minimum of four hours before testing. Three specimens were taken from each sample, with each specimen consisted of a 5.08 x 5.08 cm (2" x2") piece cut. The conditioned specimen was weighed using a laboratory balance, accurate to 0.1g. 100 ml of distilled water was placed into a 250 ml beaker.
One specimen was submerged in the beaker for 30 minutes, making certain that the specimen was completely submerged under the water to ensure complete wetting. The specimen was removed and sandwiched between two pieces of unused blotter paper and passed through wringer. The piece was left sandwiched in the wet blotters. This process was repeated for the remaining two specimens of the same sample. The blotted specimens were weighed one at a time and the weight was recorded as wet weight. The weight gain for the fabric is considered to be the dry weight subtracted from the wet weight. The recorded weight gain is the average of the three specimens.
Each sample was hung separately to dry in a location that is in conditions of 65±2% RH and 21±1°C (70±2°F). One sample was weighed to the nearest 0.1g every 5 minutes recording each weight, until completely dry. This was repeated until all of the specimens returned to their original dry weight. At this time the overall drying time was calculated by averaging the dry time of all three specimens.
The wringer (household laundry type) was equipped with soft rubber squeeze rolls 5.1-6.4cm in diameter and 28.0-30.5cm in length, with a hardness of 70-80 when measured using the Durometer tester. The wringer should be constructed so that the pressure on the top of the piece of fabric is maintained by a dead weight or lever system such that the total pressure (resulting from the total of the dead weight or lever system and the weight of the roller) was 27.2 ±0.5kg. It should be power-driven at a constant rate so that the piece of fabric passed through the rolls at a rate of 2.5cm/s. The diameters of the squeeze rolls should be measured with a pair of calipers or with a suitable micrometer. Measurements should be made at five different locations along the length of each roll, and the average of these measurements taken as the diameter of the roll. The load applied by the dead weight or lever system should be measured using a spring scale or balance, and suspending the top roll of the wringer from the scale by means of two tapes of equal length. The tapes should be placed between the rolls near their ends and should be provided with a means of holding them sufficiently far apart so that there is no contact between the tapes and the top structural member of the wringer and loading system. The spring scale or balance should be suspended from a suitable rigid support and provided with a turnbuckle or other device for adjusting the height of the scale. The usual precautions concerning the zero correction of spring scales should be observed. The turnbuckle or other device should then be adjusted to place the weight of the top roll and its weighting system on the spring scale or balance, and the system should be considered to be in equilibrium when the top roll of the wringer had been lifted just sufficiently from the bottom roll to permit vision between the bottoms of the tapes and the top of the bottom roll. At this point, the dead weight on the loading system should be adjusted until the spring scale or balance indicates a load of 27.7±0.5kg. The calibration of the spring scale or balance should be certified by the use of known certified dead weights of 24.95, 27.22, and 29.48 kg ± 0.23kg total weight. The spring scale should be accurate to within ±0.2268kg at each of the three verification loads. The linear speed of the rolls should be measured by feeding a thin steel tape through the rolls. The steel tapes should be at least 150 cm long and should be accurate to within 3mm per 150cm. The time required for exactly 150cm of this tape to pass through the nip of the rolls should be measured in seconds to the nearest second with a stopwatch calibrated in intervals of not more than 0.5s. The speed of the rolls should be adjusted until the time required for 150cm of tape to pass through the nip of the roll is 60±2s. N=3

### Vertical Flame

This test was performed in accordance with the general teachings of ASTM D6413. The testing apparatus was a cabinet including an SDL ATLAS M233M Burner. 5 warp and 5 fill specimens were cut per sample, with size 3"x12" (7.6 x 30.5cm) with the 12" (30.5 cm) length parallel to the test direction. The specimens were conditioned at 70±2°F (21.1 ±1°C), 65±2% RH prior to testing for at least 1 hour. The ignition timer was set to 12 seconds, and the flame ignition timer set to 120 seconds. The specimen was placed with the metal specimen holder and clamped with clips at two places on each side (4 clamps total) making sure the specimen is smooth and flat in the holder. The flame/fan knob was turned to off. The pilot light was lit with a butane lighter. The holder was positioned in the groove of the holder rest at the back of the cabinet so that the middle of the lower edge of the specimen is centered 3/4" (1.9 cm) above the burner. The cabinet door and the hood were closed fully. The specimen was tested as soon as possible (within 20 seconds of being placed above a lit pilot light.) The flame/fan knob was turned to "flame" to start the 12-second flame. The after-flame and the presence of melting or dripping after the 12-second flame extinguishes was recorded.

**After-flame:** Using a stop watch, the number of seconds, to the nearest 0.1 seconds, that the material continued to burn after the solenoid valve clicks off (extinguishing the ignition flame) was recorded. Do not turn the fan on until the specimen has stopped glowing, regardless of whether or not the after-glow is being measured.

**Melt/Drip:** Look for signs of melting or dripping. The exhaust fan was turned on by turning the flame/fan knob to "fan". The door release button was depressed and allowed the cabinet to ventilate for 30 seconds or until all the smoke and fumes were removed. The fan was left on and the hood open after the ventilation period. The specimen holder was removed from the cabinet and kept inside the hood. The specimen was removed from the holder and examined for additional signs of melting and dripping. The melt/drip result was recorded as pass/fail.

This process was repeated for each sample and the average data for each direction was reported. N=5 Warp, 5 Weft

### Water Repellency

This test was performed in accordance to AATCC 22. An 8" (20.3 cm) x 8" (20.3 cm) specimen was placed securely in a 6" (15.2 cm) hoop with the face side up so that the specimen surface is uniformly smooth and wrinkle-free. The hoop was placed on the test stand of the spray tester, centering the specimen beneath the spray nozzle, with the warp yarns running along the vertical direction.

250 ml of distilled water (80±2°F, 26.7±1°C) was measured into a graduated cylinder. The water was pour into the funnel of the spray tester taking care not to touch or move the funnel. The water was allowed to spray onto the specimen. The hoop was removed and the edge was tapped against a solid edge with the tested (wet) side down. The hoop was rotated 180° and the opposite edge of the hoop was firmly tapped against a solid edge, with the tested (wet) side down. The wet or spotted pattern on the sample was immediately compared to the AATCC Standard Spray Test Rating Chart. A rating was assigned corresponding to the nearest standard rating using both the standard spray test rating photos and written descriptions. N = 3. The average spray rating was reported.

### EXAMPLES

### Example 1a

A fine powder PTFE resin (Teflon 669 X, commercially available from E.I. du Pont de Nemours, Inc., Wilmington, DE) was obtained. The resin was blended with Isopar® K in the ratio of 0.184 g/g by weight of powder. The lubricated powder was compressed in a cylinder and allowed to dwell at room temperature for 18 hours. The pellet was then ram extruded at a 169 to one reduction ratio to produce a tape of approximately 0.64 mm thick. The extruded tape was subsequently compressed to a thickness of 0.25 mm. The compressed tape was then stretched in the longitudinal direction between two banks of rolls. The speed ratio between the second bank of rolls and the first bank of rolls, hence the stretch ratio was 1.4:1 with a stretch rate of 30 %/sec. The stretched tape was then restrained and dried at 200 °C. The dry tape was then expanded between banks of heated rolls in a heated chamber at a temperature of 300 °C to a ratio of 1.02:1 at a stretch rate of 0.2 %/sec, followed by an additional expansion ratio of 1.75:1 at a stretch rate of 46%/sec, followed by yet an additional expansion ratio of 1.02:1 at a stretch rate of 0.5 %/sec. This process produced a tape with a thickness of 0.24 mm.

This tape was then slit to create a cross-section of 3.30 mm wide by 0.24 mm thick and having a weight per length of 6162 dtex. The slit tape was then expanded across a heated plate set to 390 °C at a stretch ratio of 6.00:1 with a stretch rate of 70 %/sec. This was followed by another expansion across a heated plate set to 390°C at a stretch ratio of 2.50:1 with a stretch rate of 74 %/sec. This was followed by a further expansion across a heated plate set to 390 °C at a stretch ratio of 1.30:1 with a stretch rate of 26 %/sec. This was followed by running across a heated plate set to 390°C at a stretch ratio of 1.00:1 for a duration of 1.4 seconds, resulting in an amorphously locked expanded PTFE fiber.

The amorphously locked ePTFE fiber measured 316 dtex and had a rectangular cross-section and possessed the following properties: width = 1.8 mm, height = 0.0381 mm, density = 0.46 g/cm3, break strength of 6.36 N, tenacity of 2.02 cN/dtex. A scanning electron micrograph of the fiber surface taken at 1000x magnification is shown in FIG. 1.

The fiber was woven to comprise a fabric blend of a 4/70/34 (ply/denier/filaments) polyamide AJT fiber (Premier Fibers, Inc., Ansonville, SC) and the ePTFE fiber. The obtained 4/70/34 polyamide fiber measured 358 dtex and possessed the following properties: break strength = 15.03 N, tenacity = 4.21 cN/dtex. The ePTFE fiber was not twisted before weaving. The weave pattern was a 2x1 twill weave and had a thread count of 54 x 50 threads/inch (21.2 x 19.7 threads/cm, Warp x Fill). The warp fibers were comprised of the polyamide fibers and the fill fibers were comprised of the polyamide fiber and the ePTFE fiber in alternating picks. The woven fabric was comprised of 18% ePTFE and 82% polyamide by weight. The woven fabric was dyed and printed for an acceptable visible appearance, with the color being applied to the polyamide fibers (i.e., the ePTFE did not become colorized). The woven fabric had the following properties: air permeability = 58 cfm, dry time = 20 minutes, vertical wicking = 105 mm in 10 minutes, hand = 160 g, break strength = 1.36 kN (w) x 0.90 kN (f), tear strength = 125 N (w) x 85 N (f). A scanning electron micrograph of the woven fabric taken at 80x magnification is shown in FIG. 2. A scanning electron micrograph of a cross-section view of the fabric taken at 120x magnification is shown in FIG. 3. The fabric had a weight of 183 g/m2.

Example **1b**

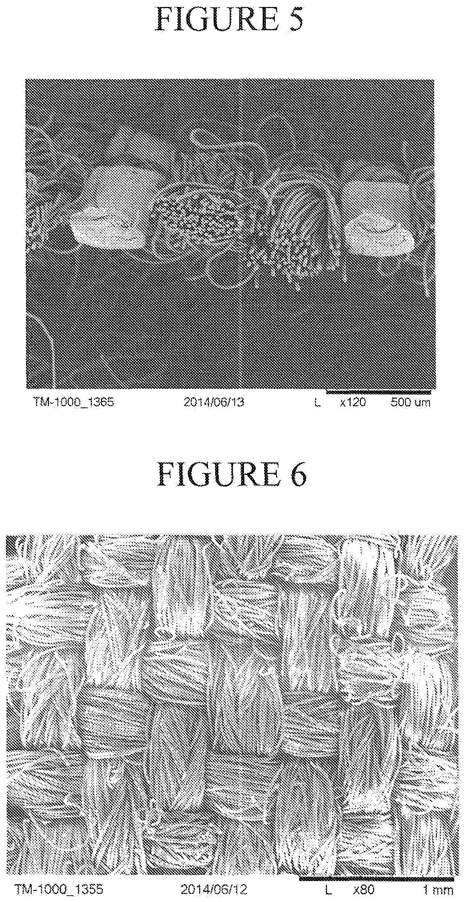

A woven fabric was constructed in the same manner as described in Example 1a with the exception that the ePTFE was inserted in every third pick in the fill direction of the weave. The ePTFE fiber was not twisted before being woven. The woven fabric was comprised of 12% ePTFE and 88% polyamide by weight. The woven fabric was dyed and printed for an acceptable visible appearance, with the color being applied to the polyamide fibers. The woven fabric had the following properties: air permeability = 48 cfm, dry time = 25 minutes, vertical wicking = 105 mm in 10 minutes, hand = 179 g, break strength = 1.37 kN (w) x 1.05 kN (f), tear strength = 120 N (w) x 85 N (f). A scanning electron micrograph of the woven fabric taken at 80x magnification is shown in FIG. 4. A scanning electron micrograph of a cross-section view of the fabric taken at 120x magnification is shown in FIG. 5. The fabric had a weight of 190 g/m2.

Comparative Example 1c

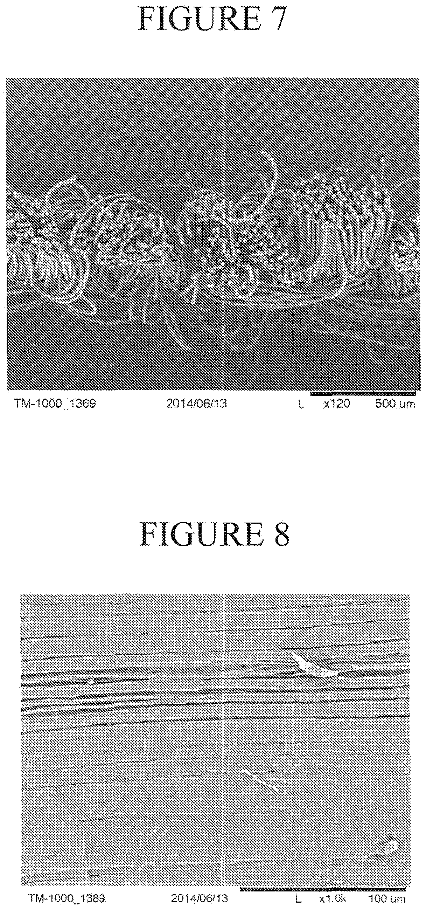

A woven fabric was constructed in the same manner as described in Example 1a and 1b with the exception that no ePTFE was included. The woven fabric was comprised of 0% ePTFE and 100% polyamide by weight. The woven fabric was dyed and printed for an acceptable visible appearance, with the color being applied to the polyamide fibers. The woven fabric had the following properties: air permeability = 41 cfm, dry time = 30 minutes, vertical wicking = 112 mm in 10 minutes, hand = 201 g, break strength = 1.39 kN (w) x 1.25 kN (f), tear strength = 62 N (w) x 58 N (f). A scanning electron micrograph of the woven fabric taken at 80x magnification is shown in FIG. 6. A scanning electron micrograph of a cross-section view of the fabric taken at 120x magnification is shown in FIG. 7. The fabric had a weight of 193 g/m2.

Example 2a

An ePTFE fiber by W.L. Gore & Associates (part number V111617, W.L. Gore & Associates, Inc., Elkton, MD) was obtained. The ePTFE fiber measured 226 dtex and had a rectangular cross-section and possessed the following properties: width = 0.5 mm, height = 0.0254 mm, density = 1.78 g/cm$^3$, break strength = 8.18 N, tenacity = 3.64 cN/dtex. A scanning electron micrograph of the top surface of the fiber taken at 1000x magnification is shown in FIG. 8.

The fiber was woven to comprise a fabric blend of a 42/2cc (cotton count/ply) 50/50 polyamide/cotton staple fiber (part number Y52NYL48CP42.00/2-1RS-03, Parkdale Mills, Gastonia, NC), a 17/1cc (cotton count/ply) 50/50 polyamide/cotton staple fiber (part number Y52NYL48CP17.00-1RS-02, Parkdale Mills, Gastonia, NC) and the ePTFE fiber. The obtained 42/2cc 50/50 polyamide-cotton fiber measured 286 dtex and possessed the following properties: break strength = 5.74 N, tenacity = 2.0 cN/dtex. The obtained 17/1cc 50/50 polyamide/cotton fiber measured 349 dtex and possessed the following properties: break strength = 6.98 N, tenacity = 2.0 cN/dtex

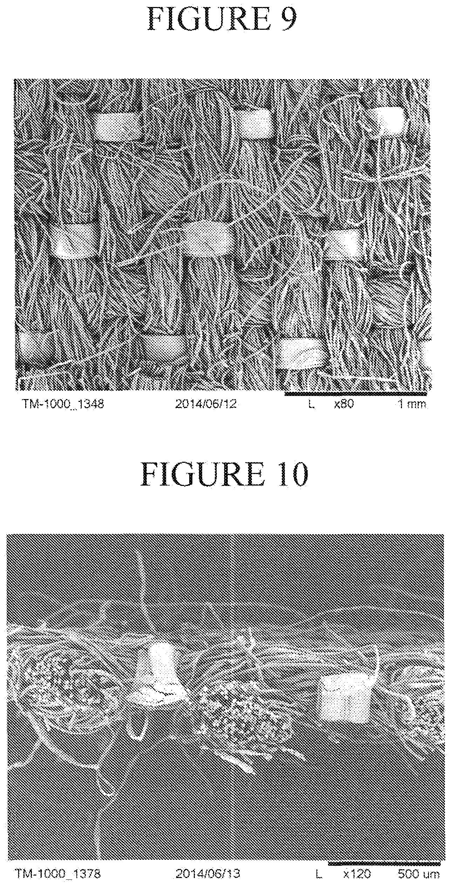

The ePTFE fiber was not twisted before weaving. The weave pattern was a 2x1 twill weave and had a thread count of 70 x 64 threads/inch (27.6 x 25.2 threads/cm, Warp x Fill). The warp fibers were comprised of the 42/2cc polyamide-cotton fibers, and the fill fibers were comprised of the 17/1cc polyamide-cotton fibers and the ePTFE fiber in alternating picks. The woven fabric was comprised of 16% ePTFE, 42% polyamide, and 42% cotton by weight. The fabric was dyed and printed, so that the color remained in the polyamide-cotton fibers for an acceptable visible appearance. The woven fabric had the following properties: air permeability = 49 cfm, dry time = 27 minutes, vertical wicking = 118 mm in 10 minutes, hand = 134 g, break strength = 658 N (w) x 667 N (f), tear strength = 97 N (w) x 51 N (f), and no melt and no drip in vertical flame. A scanning electron micrograph of the woven fabric taken at 80x magnification is shown in FIG. 9. A scanning electron micrograph of a cross-section view of the fabric taken at 120x magnification is shown in FIG. 10. The fabric had a weight of 173 g/m2.

Example 2b

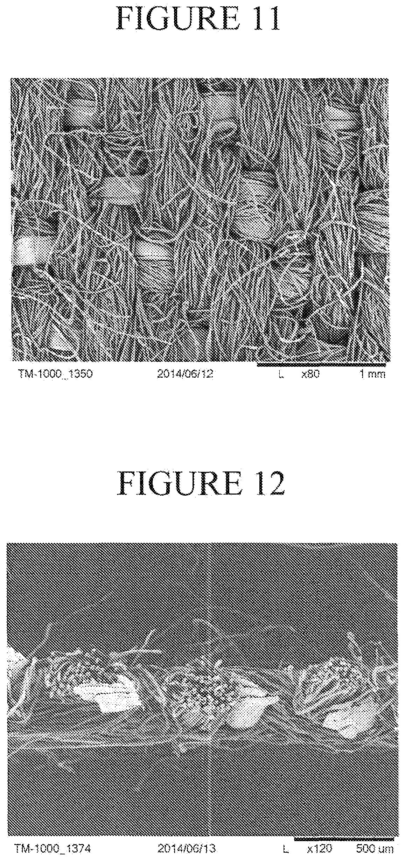

A woven fabric was constructed in a similar manner as described in Example 2a with the exception that the ePTFE was twisted with a 21.75/1cc 50/50 polyamide/cotton staple fiber (3-2175R-02, Inman Mills, Inman, SC), and inserted in every pick in the fill direction of the weave. The obtained 21.75/1cc polyamide-cotton single ply staple fiber measured 278 dtex and possessed the following properties: break strength = 4.09 N, tenacity = 1.49 cN/dtex. The two fibers were twisted at a level of 6s (236 turns per meter). The weaving pattern was a 2x1 twill weave and had a thread count of 70 x 40 threads/inch (27.6 x 15.7 threads/cm, Warp x Fill). The lower pick thread count was introduced to maintain a similar weight of the fabric for comparison. The warp fibers were comprised of the 42/2cc fibers, and the fill fibers were comprised of 21.75/1cc fibers twisted with the ePTFE fiber in every pick. The woven fabric was comprised of 20% ePTFE, 40% polyamide, and 40% cotton by weight. The woven fabric had the following properties: air permeability = 58 cfm, dry time = 25 minutes, vertical wicking = 120 mm in 10 minutes, hand = 125 g, break strength = 641 N (w) x 752 N (f), tear strength = 88 N (w) x 120 N (f), and no melt and no drip in vertical flame. A scanning electron micrograph of the woven fabric taken at 80x magnification is shown in FIG. 11. A scanning electron micrograph of a cross-section view of the fabric taken at 120x magnification is shown in FIG. 12. The fabric had a weight of 184 g/m2.

Example 2c

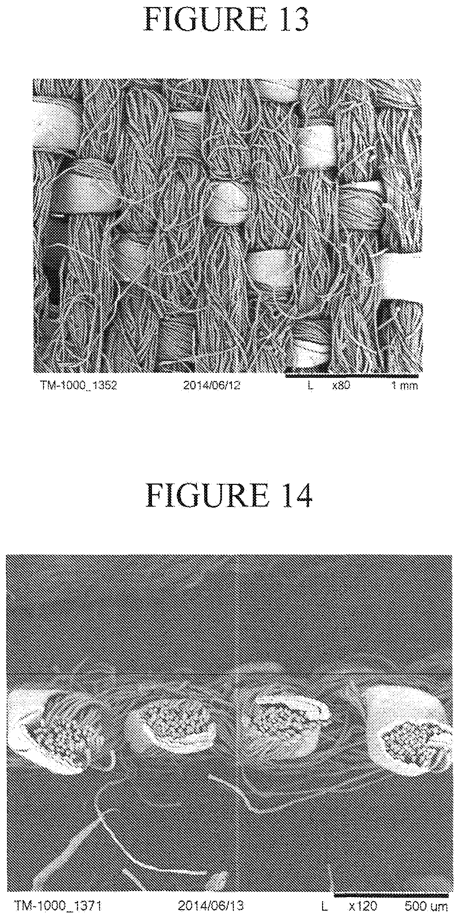

A woven fabric was constructed in a similar manner as described in Example 2b with the exception that the ePTFE was twisted with a 2/70/34 (ply/denier/filament) polyamide AJT fiber (Premier Fibers, Inc., Ansonville, SC), and inserted in every pick in the fill direction of the weave. The obtained polyamide fiber measured 179 dtex and possessed the following properties: break strength = 7.78 N, tenacity = 4.37 cN/dtex. The two fibers were twisted at a level of 12s (472 turns per meter). The weaving pattern was a 2x1 twill weave and had a thread count of 70 x 46 threads/inch (27.6 x 18.1 threads/cm, Warp x Fill). The higher pick thread count was introduced to maintain a similar weight of the fabric for comparison. The warp fibers were comprised of the 42/2cc 50/50 polyamide/cotton fibers, and the fill fibers were comprised of 2/70/34 polyamide fibers twisted with the ePTFE fiber in every pick. The woven fabric was comprised of 22% ePTFE, 57% polyamide, and 21% cotton by weight. The woven fabric had the following properties: air permeability = 70 cfm, dry time = 22 minutes, vertical wicking = 113 mm in 10 minutes, hand = 132 g, break strength = 645 N (w) x 921 N (f), tear strength = 70 N (w) x 119 N (f), and no melt and no drip in vertical flame. A scanning electron micrograph of the woven fabric taken at 80x magnification is shown in FIG. 13. A scanning electron micrograph of a cross-section view of the fabric taken at 120x magnification is shown in FIG 14. The fabric had a weight of 186 g/m2.

**Example 2d**

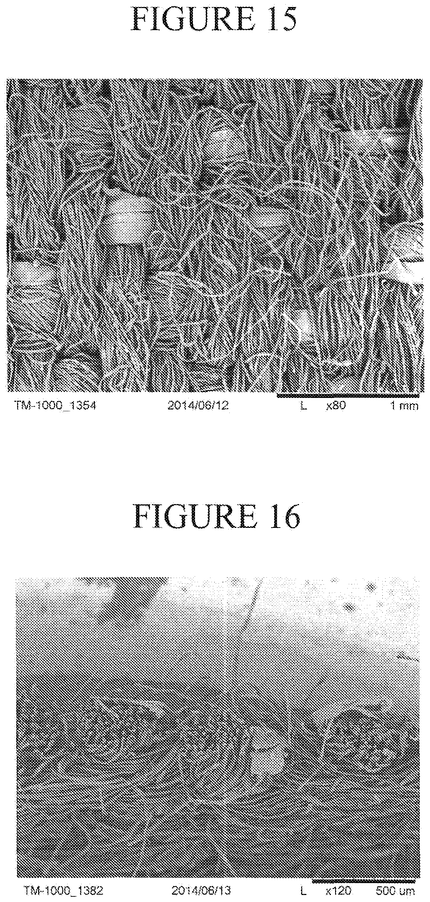

A woven fabric was constructed in a similar manner as described in Example 2b and 2c with the exception that the ePTFE was twisted with a 20.5/1cc cotton fiber (Inman Mills, Inman, SC) and inserted in every pick in the fill direction of the weave. The obtained cotton fiber measured 347 dtex and possessed the following properties: break strength = 6.94 N, tenacity = 2.0 cN/dtex. The two fibers were twisted at a level of 6s (236 turns per meter). The weaving pattern was a 2x1 twill weave and had a thread count of 70 x 40 threads/inch (27.6 x 15.7 threads/cm, Warp x Fill). The pick thread count was chosen to maintain a similar weight of the fabric for comparison. The warp fibers were comprised of the 42/2cc 50/50 polyamide/cotton fibers, and the fill fibers were comprised of the 20.5/1cc cotton fibers twisted with the ePTFE fiber in every pick. The woven fabric was comprised of 20% ePTFE, 21% polyamide, and 59% cotton by weight. The woven fabric had the following properties: air permeability = 52 cfm, dry time = 27 minutes, vertical wicking = 127 mm in 10 minutes, hand = 137 g, break strength = 654 N (w) x 747 N (f), tear strength = 97 N (w) x 77 N (f), and no melt and no drip in vertical flame. A scanning electron micrograph of the woven fabric taken at 80x magnification is shown in FIG. 15. A scanning electron micrograph of a cross-section view of the fabric taken at 120x magnification is shown in FIG 16. The fabric had a weight of 186 g/m2.

## Example 2e

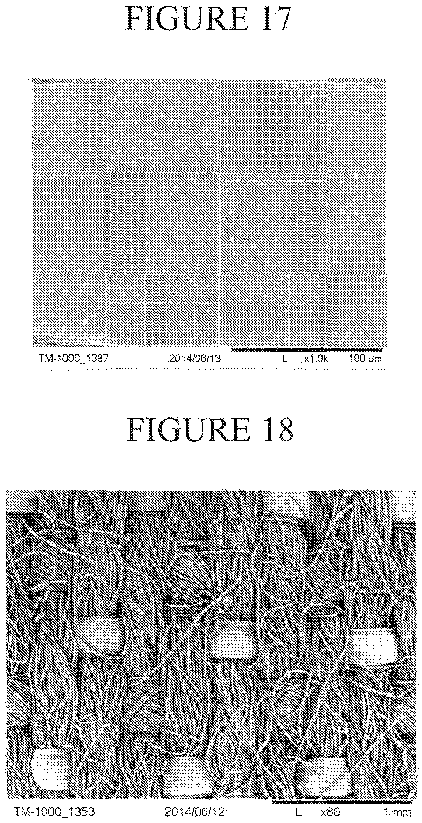

A commercially available ePTFE fiber available from W.L. Gore & Associates (part number V112961, W.L. Gore & Associates, Inc., Elkton, MD) was obtained. The ePTFE fiber measured 457 dtex and had a rectangular cross-section and possessed the following properties: width = 0.6 mm, height = 0.0419 mm, density = 1.82 g/cm$^3$, break strength = 18.33 N, tenacity = 4.03 cN/dtex. A scanning electron micrograph of the top surface of the fiber taken at 1000x magnification is shown in FIG. 17.

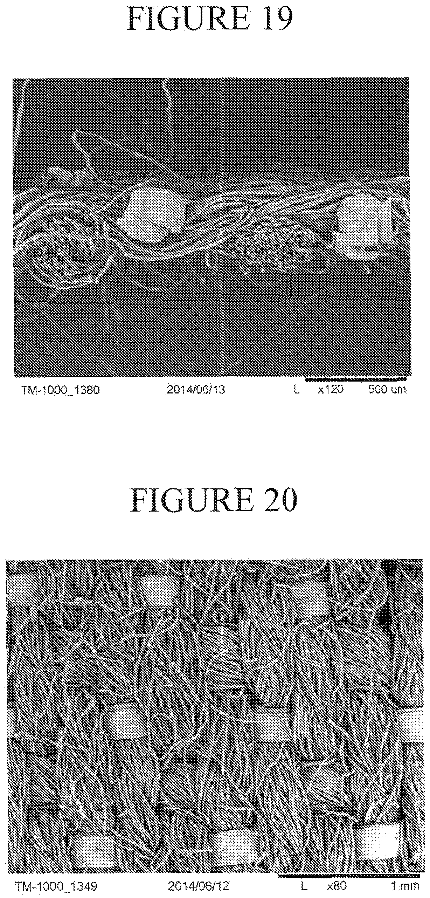

A woven fabric was constructed in a similar manner as described in Example 2a with the exception that the ePTFE was 457 dtex instead of 226 dtex. The ePTFE fiber was not twisted before weaving. The weave pattern was a 2x1 twill weave and had a thread count of 70 x 48 threads/inch (27.6 x 18.9 threads/cm, Warp x Fill). The warp fibers were comprised of the 42/2cc polyamide-cotton fibers, and the fill fibers were comprised of the 17/1cc polyamide-cotton fibers and the ePTFE fiber in alternating picks. The woven fabric was comprised of 24% ePTFE, 38% polyamide, and 38% cotton by weight. The fabric was dyed and printed, so that the color remained in the polyamide-cotton fibers for an acceptable visible appearance. The woven fabric had the following properties: air permeability = 71 cfm, dry time = 24 minutes, vertical wicking = 118 mm in 10 minutes, hand = 148 g, break strength = 658 N (w) x 681 N (f), tear strength = 81 N (w) x 66 N (f), and no melt and no drip in vertical flame. A scanning electron micrograph of the woven fabric taken at 80x magnification is shown in FIG. 18. A scanning electron micrograph of a cross-section view of the fabric taken at 120x magnification is shown in FIG 19. The fabric had a weight of 182 g/m2.

## Example 2f

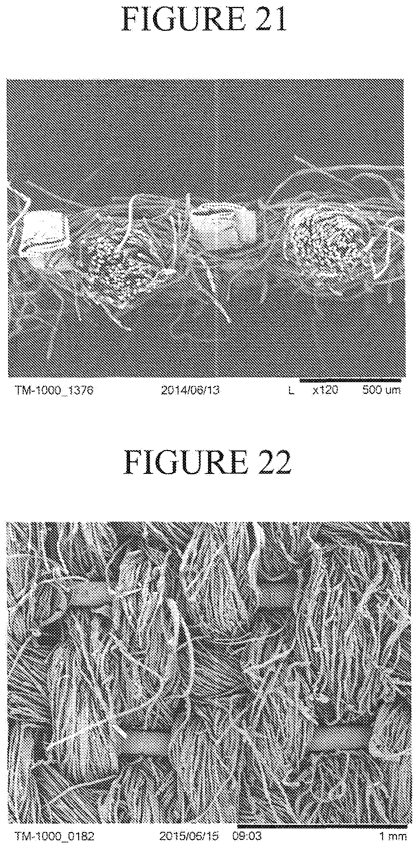

A woven fabric was constructed in a similar manner as described in Example 2a with the exception that the fill direction has less picks. The ePTFE fiber was not twisted before weaving. The weave pattern was a 2x1 twill weave and had a thread count of 70 x 52 threads/inch (27.6 x 20.4 threads/cm, Warp x Fill). The warp fibers were comprised of the 42/2cc polyamide-cotton fibers, and the fill fibers were comprised of the 17/1cc polyamide-cotton fibers and the ePTFE fiber in alternating picks. The woven fabric was comprised of 14% ePTFE, 43% polyamide, and 43% cotton by weight. The fabric was dyed and printed, so that the color remained in the polyamide-cotton fibers for an acceptable visible appearance. The woven fabric had the following properties: air permeability = 59 cfm, dry time = 22 minutes, vertical wicking = 115 mm in 10 minutes, hand = 115 g, break strength = 667 N (w) x 547 N (f), tear strength = 95 N (w) x 60 N (f), and no melt and no drip in vertical flame. A scanning electron micrograph of the woven fabric taken at 80x magnification is shown in FIG. 20. A scanning electron micrograph of a cross-section view of the fabric taken at 120x magnification is shown in FIG 21. The fabric had a weight of 165 g/m2.

## Example 2g

A poly(vinylidene fluoride) (PVDF) monofilament fiber from Hahl Inc. (Hahl, Inc., Lexington, SC) was obtained. The PVDF fiber measured 267 dtex and had a substantially round cross-section and possessed the following properties: density = 1.78 g/cm$^3$.

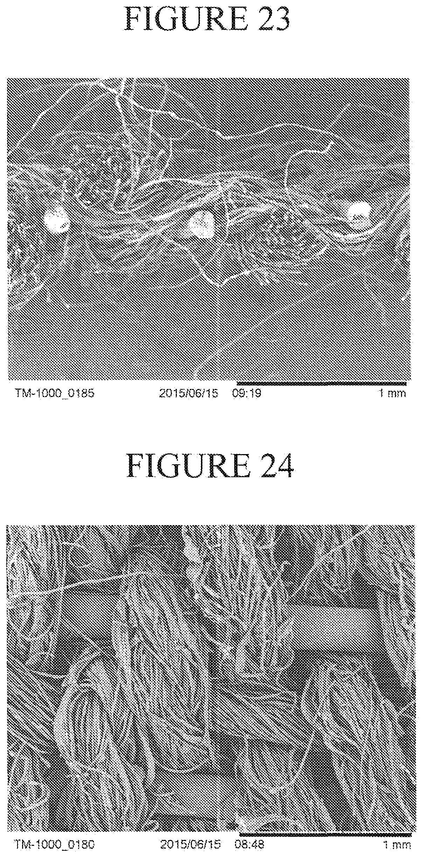

A woven fabric was constructed in a similar manner as described in Example 2a with the exception that the fiber was 267 dtex PVDF. The PVDF fiber was not twisted before weaving. The weave pattern was a 2x1 twill weave and had a thread count of 70 x 54 threads/inch (27.6 x 18.9 threads/cm, Warp x Fill). The warp fibers were comprised of the 42/2cc polyamide-cotton fibers, and the fill fibers were comprised of the 17/1cc polyamide-cotton fibers and the PVDF fiber in alternating picks. The woven fabric was comprised of 14% PVDF, 43% polyamide, and 43% cotton by weight. The woven fabric had the following properties: air permeability = 130 cfm, dry time = 25 minutes, vertical wicking = 110 mm in 10 minutes, hand = 463 g, and no melt and no drip in vertical flame. A scanning electron micrograph of the surface of the woven fabric taken at 80x magnification is shown in FIG. 22. A scanning electron micrograph of the cross section of the woven fabric taken at 80x magnification is shown in FIG. 23.

## Example 2h

A polyether ether ketone (PEEK) fiber from Hahl Inc. (Hahl, Inc., Lexington, SC) was obtained. The PEEK fiber measured 433 dtex and had a substantially round cross-section and possessed the following properties: density = 1.32 g/cm$^3$.

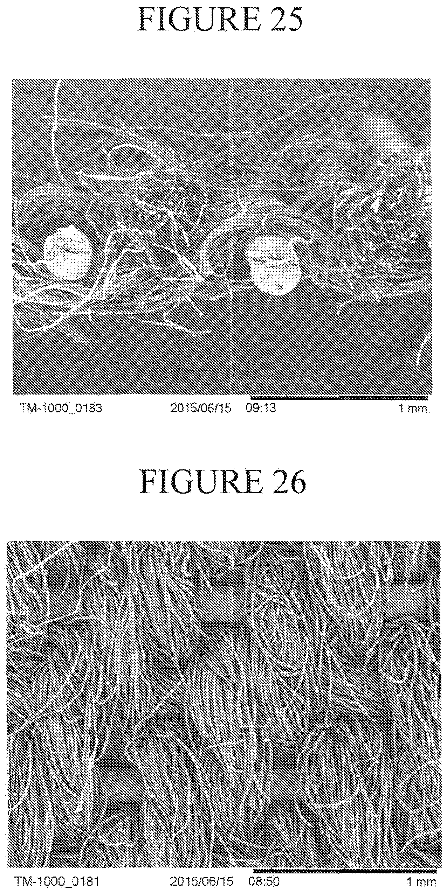

A woven fabric was constructed in a similar manner as described in Example 2a with the exception that the fiber was 433 dtex PEEK. The PEEK fiber was not twisted before weaving. The weave pattern was a 2x1 twill weave and had a thread count of 70 x 44 threads/inch (27.6 x 18.9 threads/cm, Warp x Fill). The warp fibers were comprised of the 42/2cc polyamide-cotton fibers, and the fill fibers were comprised of the 17/1cc polyamide-cotton fibers and the PEEK fiber in alternating picks. The woven fabric was comprised of 22% PEEK, 39% polyamide, and 39% cotton by weight. The woven fabric had the following properties: air permeability = 160 cfm, dry time = 25 minutes, vertical wicking = 120 mm in 10 minutes, hand = too stiff for test (unmeasurable), and no melt and no drip in vertical flame. A scanning electron micrograph of the surface of the woven fabric taken at 80x magnification is shown in FIG. 24. A scanning electron micrograph of the cross section of the woven fabric taken at 80x magnification is shown in FIG. 25.

### Example 2i

A polyphenylene sulfide (PPS) fiber from Shakespeare Company LLC. (Shakespeare Company LLC., Columbia, SC) was obtained. The PPS fiber measured 422 dtex and had a substantially round cross-section and possessed the following properties: density = 1.35 g/cm$^3$.

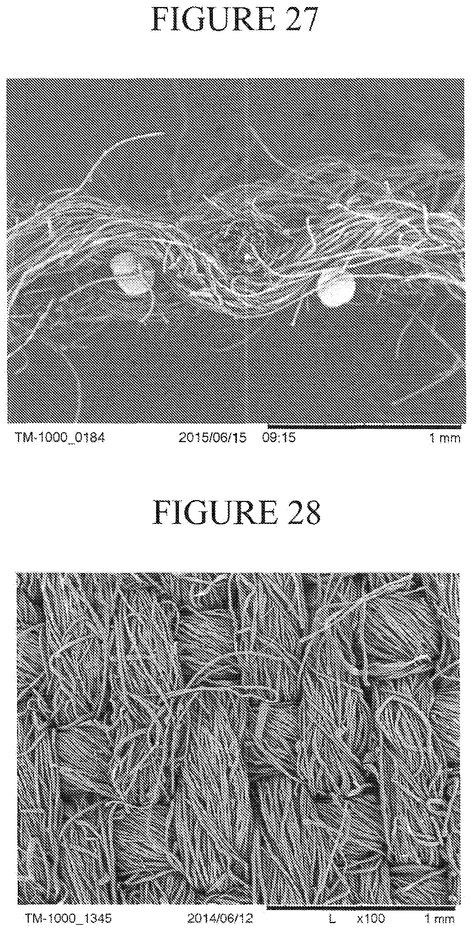

A woven fabric was constructed in a similar manner as described in Example 2a with the exception that the fiber was 422 dtex PPS. The PPS fiber was not twisted before weaving. The weave pattern was a 2x1 twill weave and had a thread count of 70 x 48 threads/inch (27.6 x 18.9 threads/cm, Warp x Fill). The warp fibers were comprised of the 42/2cc polyamide-cotton fibers, and the fill fibers were comprised of the 17/1cc polyamide-cotton fibers and the PPS fiber in alternating picks. The woven fabric was comprised of 22% PPS, 39% polyamide, and 39% cotton by weight. The woven fabric had the following properties: air permeability = 120 cfm, dry time = 25 minutes, vertical wicking = 95 mm in 10 minutes, hand = too stiff for test (unmeasurable), and no melt and no drip in vertical flame. A scanning electron micrograph of the surface of the woven fabric taken at 80x magnification is shown in FIG. 26. A scanning electron micrograph of the cross section of the woven fabric taken at 80x magnification is shown in FIG. 27.

### Comparative Example 2j

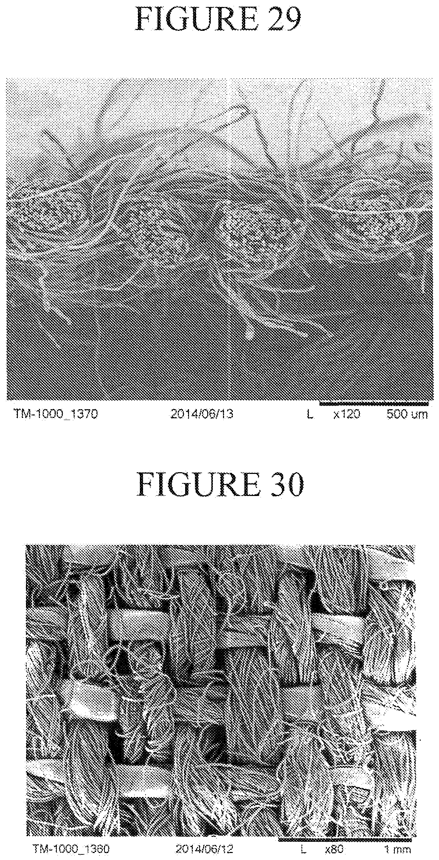

A woven fabric was constructed in a similar manner as described in Example 2a with the exception that no ePTFE was included. The weave pattern was a 2x1 twill weave and had a thread count of 70 x 50 threads/inch (27.6 x 19.7 threads/cm, Warp x Fill). The warp fibers were comprised of the 42/2cc polyamide-cotton fibers, and the fill fibers were comprised of the 17/1cc polyamide-cotton fibers. The woven fabric was comprised of 50% polyamide and 50% cotton by weight. The fabric was dyed and printed, so that the color remained in the polyamide-cotton fibers for an acceptable visible appearance. The woven fabric had the following properties: air permeability = 54 cfm, dry time = 28 minutes, vertical wicking = 119 mm in 10 minutes, hand = 114 g, break strength = 667 N (w) x 516 N (f), tear strength = 47 N (w) x 50 N (f), and no melt and no drip in vertical flame. A scanning electron micrograph of the woven fabric taken at 80x magnification is shown in FIG. 28. A scanning electron micrograph of a cross-sectional view of the fabric taken at 120x magnification is shown in FIG 29. The fabric had a weight of 176 g/m$^2$.

### Example 3a

An ePTFE fiber by W.L. Gore & Associates (part number V111617, W.L. Gore & Associates, Inc., Elkton, MD) was obtained. The ePTFE fiber measured 226 dtex and had a rectangular cross-section and possessed the following properties: width = 0.5 mm, height = 0.0254 mm, density = 1.78 g/cm$^3$, break strength = 8.18 N, tenacity = 3.64 cN/dtex. A scanning electron micrograph of the top surface of the fiber taken at 1000x magnification is shown in FIG. 8.

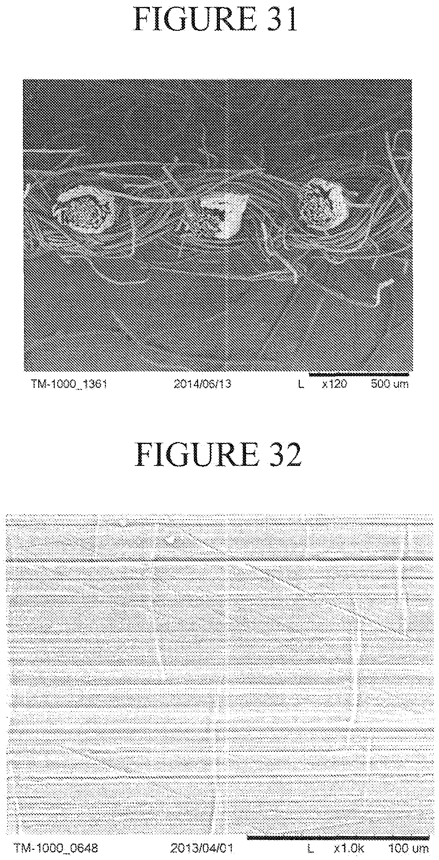

The fiber was woven to comprise a fabric blend of a 36/2cc (cotton count/ply) Nomex $^®$ aramid staple fiber (2566000, Springfield LLC, Gaffney, SC), a 38/1cc (cotton count/ply) Nomex $^®$ aramid staple fiber (2000000, Springfield LLC, Gaffney, SC, and the ePTFE fiber. The obtained 36/2cc Nomex $^®$ aramid staple fiber measured 294 dtex and possessed the following properties: break strength = 6.40 N, tenacity = 2.2 cN/dtex. The obtained 38/1cc Nomex $^®$ aramid staple fiber measured 349 dtex and possessed the following properties: break strength = 2.45 N, tenacity = 1.6 cN/dtex. The ePTFE fiber and the 38/1cc Nomex $^®$ aramid fiber were twisted at 6s (236 turns per meter) prior to weaving. The weave pattern was a plain weave and had a thread count of 60 x 40 threads/inch (23.6 x 15.7 threads/cm, Warp x Fill). The warp fibers were comprised of the 36/2cc Nomex $^®$ aramid fibers, and the fill fibers were comprised of the twisted 38/1cc Nomex $^®$ aramid fibers and the ePTFE fiber in every pick. The woven fabric was comprised of 22% ePTFE and 78% Nomex $^®$ aramid by weight. The fabric was dyed and printed, so that the color remained in the Nomex $^®$ aramid fibers for an acceptable visible appearance. The woven fabric had the following properties: air permeability = 238 cfm, dry time = 15 minutes, vertical wicking = 92 mm in 10 minutes, tear strength = 67 N (w) x 76 N (f), and no after flame in vertical flame. A scanning electron micrograph of the surface of the woven fabric taken at 80x magnification is shown in FIG. 30. A scanning electron micrograph of a cross-sectional view of the fabric taken at 120x magnification is shown in FIG 31. The fabric had a weight of 155 g/m$^2$.

### Comparative Example 3b

A woven fabric was constructed in a similar manner as described in Example 3a with the exception that no ePTFE was included. The weave pattern was a plain weave and had a thread count of 60 x 40 threads/inch (23.6 x 15.7 threads/cm, Warp x Fill). The warp fibers were comprised of the 36/2cc Nomex ® aramid fibers, and the fill fibers were also comprised of the 36/2cc Nomex ® aramid fibers. The woven fabric was comprised of 0% ePTFE and 100% Nomex ® aramid by weight. The fabric was dyed and printed, so that the color remained in the Nomex ® aramid fibers for an acceptable visible appearance. The woven fabric had the following properties: air permeability = 201 cfm, dry time = 20 minutes, vertical wicking = 95 mm in 10 minutes, tear strength = 35 N (w) x 28 N (f), and no after flame in vertical flame. The fabric had a weight of 154 g/m$^2$.

**Example 4a**

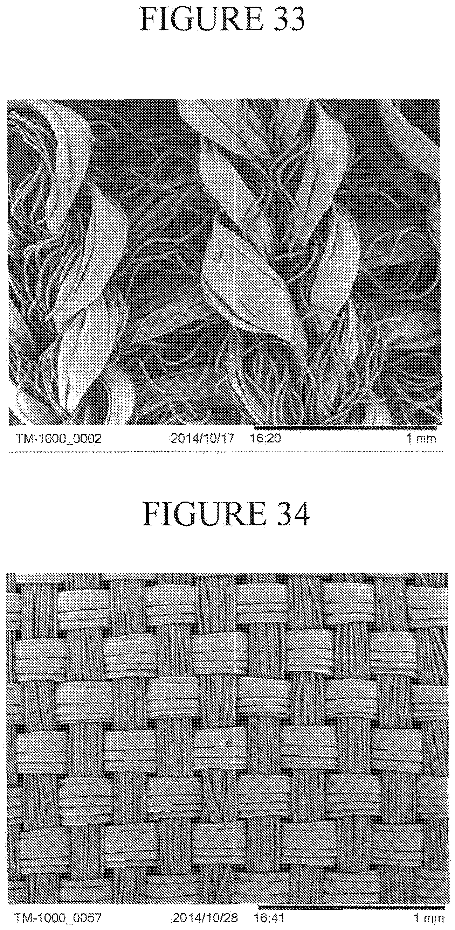

A knitted sock was made in the following manner. An ePTFE fiber having a density of 1.94 g/cm$^3$ (part number V111776, W.L. Gore & Associates, Inc., Elkton, MD) was obtained. The ePTFE fiber measured 111 dtex and had a rectangular cross-section and possessed the following properties: width = 0.5 mm, height = 0.0114 mm, density = 1.94 g/cm$^3$, break strength = 3.96 N, tenacity = 3.58 cN/dtex, and fibril length = indeterminate (no visible nodes to define an endpoint for the fibrils). A scanning electron micrograph of the top surface of the fiber taken at 1000x magnification is shown in FIG. 32. A scanning electron micrograph of the surface of the knitted fabric taken at 80x magnification is shown in FIG. 33. Each ePTFE fiber was knitted with a 70 denier (34 filament count) nylon 6,6 yarn using a 4.5 inch diameter 200 needle (stitches per complete rotation) circular knitting machine with a heel and an elasticated ankle band. The final PTFE content was 68.8% by weight (nylon content was 31.2%). The final sock after seaming the toe area with 2 ply of 30 denier nylon 6,6 yarn was a size 10 (U.S. mens sizing) and was rendered hydrophilic by washing in a washing machine for a single cycle with commercially available fabric softener (Melasoft LS 1C2800 available from Melatex Incorporated, 3818 Northmore Street, Charlotte, NC 28205).

A 1 X 6 inch swatch of this high density ePTFE sock was subjected to the Vertical Wicking Test described above. The high density ePTFE sock exhibited wicking of 17 mm after 10 minutes.

The high density ePTFE socks was subjected to the Weight Gain and Drying Time test listed above. The initial weight of the fabric was 178 gsm. The overall weight gain as measured in the Weight Gain and Drying Time Test Method for the fabric was 23 gsm, or 13%.

**Comparative Example 4b**

A comparative sock was made in the same manner as described in Example 4a except that the ePTFE fibers were replaced with an equal number of 70 denier Nylon 6,6 yarns. A 1 X 6 inch swatch of the all nylon sock was subjected to the Vertical Wicking Test described above. The all nylon fiber sock exhibited wicking of 10 mm after 10 minutes.

The all nylon sock was also subjected to the Weight Gain and Drying Time test listed above. The initial weight of the fabric was 143 gsm. The overall weight gain as measured in the Weight Gain and Drying Time Test Method for the fabric was 39 gsm, or 27%.

**Example 5a**

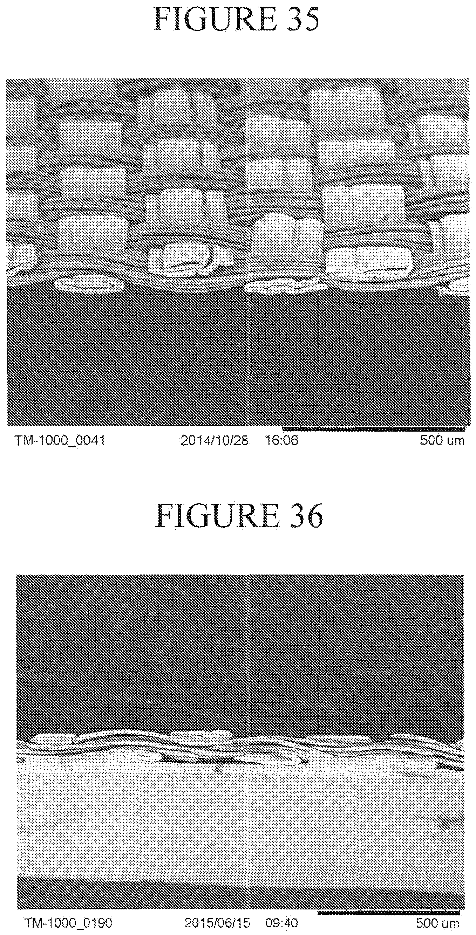

The ePTFE fiber from Example 4 was woven to comprise a fabric blend of a 70/34 (denier/filaments) semi-dull flat polyamide fiber (Premier Fibers, Inc., Ansonville, SC) and the ePTFE fiber. The obtained polyamide fiber measured 78 dtex. The weave pattern was a plain weave and had a thread count of 96 x 92 threads/inch (37.7 x 36.2 threads/cm, Warp x Fill). The warp fibers were comprised of the polyamide fibers, and the fill fibers were comprised of the ePTFE fiber in every pick. The woven fabric was comprised of 58% ePTFE and 42% polyamide by weight. The fabric was dyed so that the color remained in the polyamide fibers for an acceptable visible appearance. The woven fabric had the following properties: air permeability = 105 cfm, weight = 77 gsm, water weight gain = 10gsm, MVTR = 32981 g/m2/24 hours. A scanning electron micrograph of the surface of the woven fabric taken at 80x magnification is shown in FIG. 34. A scanning electron micrograph of a cross-section view of the fabric taken at 150x magnification is shown in FIG. 35.

An amorphously locked ePTFE membrane was obtained having the following properties: thickness=0.04 mm, density=0.47 g/cc, matrix tensile strength in the strongest direction=105.8 MPa, matrix tensile strength in the direction orthogonal to the strongest direction=49.9 MPa, Gurley=16.2 s, MVTR=64168 g/m2/24 hours. Polyurethane (PU) was applied by continuously coating the ePTFE membrane and allowing it to at least partially penetrate the pores of the membrane, then cured.

The woven fabric was laminated to the ePTFE membrane composite in the following manner. The fabric and the ePTFE membrane composite were bonded together by applying a dot pattern of a melted polyurethane adhesive to the PU side of the membrane. While the polyurethane adhesive dots were molten, the fabric was positioned on top of the adhesive side of the membrane. This construct (article) was allowed to cool.

The resulting article had the following properties: hand=199 g, MVTR = 8795 g/m2/24 hours, and water repellency = 70%.

A fluoroacrylate coating was applied to the woven fabric in order to render it hydrophobic and oleophobic.

The resulting article had the following property: water repellency = 100%. A scanning electron micrograph of a cross-section view of the fabric taken at 120x magnification is shown in FIG. 36.

Example 5b

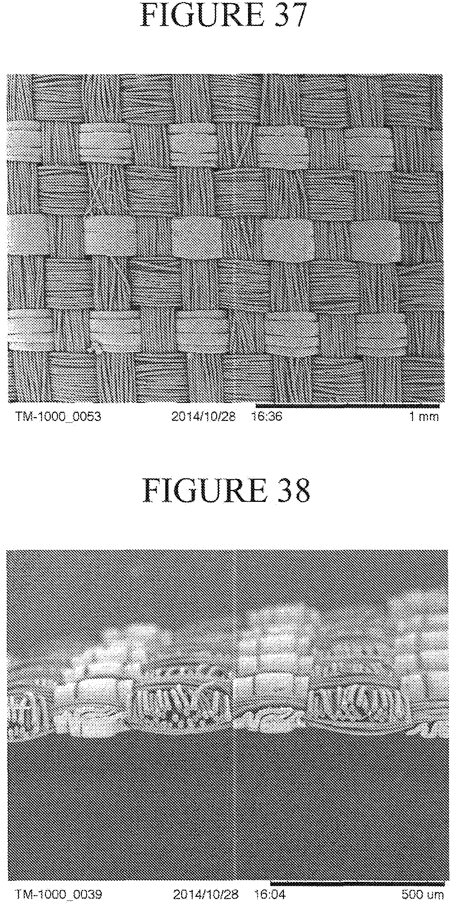

A woven fabric was constructed similarly to Example 5a, except the ePTFE fiber was woven in every other pick in the fill direction. The woven fabric was comprised of 29% ePTFE and 71% polyamide by weight. The fabric was dyed so that the color remained in the polyamide fibers for an acceptable visible appearance. The woven fabric had the following properties: air permeability = 34 cfm, weight = 73 gsm, water weight gain = 17gsm, MVTR = 28482 g/m2/24 hours. A scanning electron micrograph of the woven fabric taken at 80x magnification is shown in FIG. 37. A scanning electron micrograph of a cross-section view of the fabric taken at 150x magnification is shown in FIG 38.

An amorphously locked ePTFE membrane was obtained having the following properties: thickness=0.04 mm, density=0.47 g/cc, matrix tensile strength in the strongest direction=105.8 MPa, matrix tensile strength in the direction orthogonal to the strongest direction=49.9 MPa, Gurley=16.2 s, MVTR=64168 g/m2/24 hours. Polyurethane (PU) was applied by continuously coating the ePTFE membrane and allowing it to at least partially penetrate the pores of the membrane, then cured.

The woven fabric was laminated to the ePTFE membrane composite in the following manner. The fabric and the ePTFE membrane composite were bonded together by applying a dot pattern of a melted polyurethane adhesive to the polyurethane side of the membrane. While the polyurethane adhesive dots were molten, the fabric was positioned on top of the adhesive side of the membrane. This construct (article) was allowed to cool.

The resulting article had the following properties: hand=207 g, MVTR = 9075 g/m2/24 hours, and water repellency = 50%.

A fluoroacrylate coating was applied to the woven fabric in order to render it hydrophobic and oleophobic.

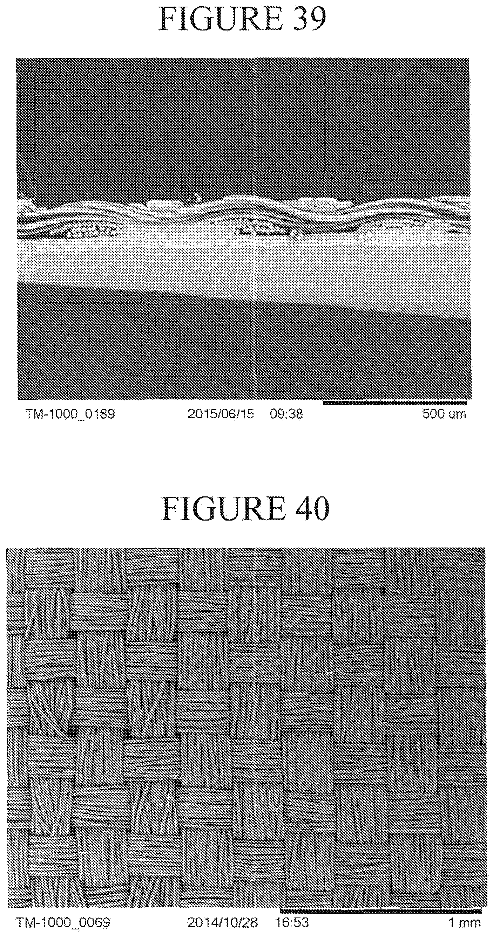

The resulting article had the following property: water repellency = 100%. A scanning electron micrograph of a cross-section view of the fabric taken at 120x magnification is shown in FIG. 39.

**Comparative Example 5c**

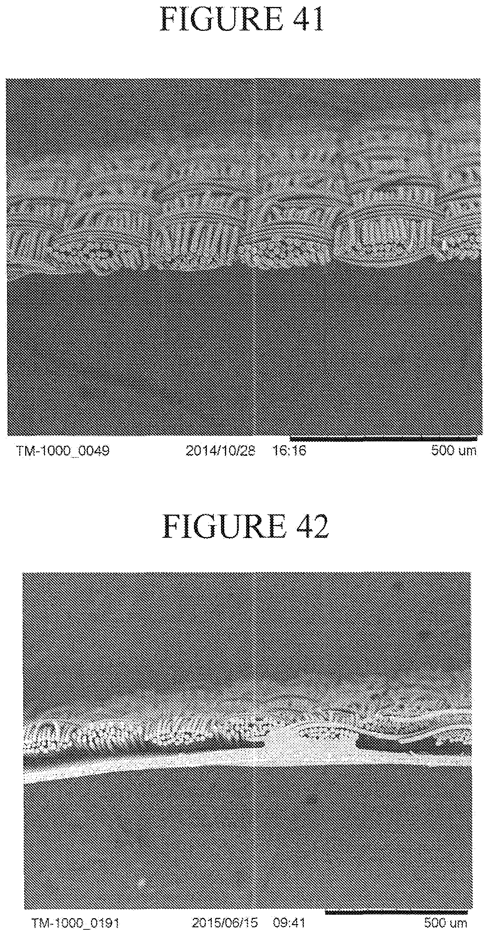

A woven fabric was constructed similarly to Example 5a, except no ePTFE fiber was used. The woven fabric was comprised of 0% ePTFE and 100% polyamide by weight. The fabric was dyed so that the color remained in the polyamide fibers for an acceptable visible appearance. The woven fabric had the following properties: air permeability = 30 cfm, weight = 65 gsm, water weight gain = 25 gsm, MVTR = 28526 g/m2/24 hours. A scanning electron micrograph of the surface of the woven fabric taken at 80x magnification is shown in FIG. 40. A scanning electron micrograph of a cross-section view of the fabric taken at 150x magnification is shown in FIG 41.

An amorphously locked ePTFE membrane was obtained having the following properties: thickness=0.04 mm, density=0.47 g/cc, matrix tensile strength in the strongest direction=105.8 MPa, matrix tensile strength in the direction orthogonal to the strongest direction=49.9 MPa, Gurley=16.2 s, MVTR=64168 g/m2/24 hours. Polyurethane (PU) was applied by continuously coating the ePTFE membrane and allowing it to at least partially penetrate the pores of the membrane, then cured.

The woven fabric was laminated to the ePTFE membrane composite in the following manner. The fabric and the ePTFE membrane composite were bonded together by applying a dot pattern of a melted polyurethane adhesive to the PU side of the membrane. While the polyurethane adhesive dots were molten, the fabric was positioned on top of the adhesive side of the membrane. This construct (article) was allowed to cool.

The resulting article had the following properties: hand=205 g, MVTR = 9508 g/m2/24 hours, and water repellency = 0%.

A fluoroacrylate coating was applied to the woven fabric in order to render it hydrophobic and oleophobic.

The resulting article had the following property: water repellency = 100%. A scanning electron micrograph of a cross-section view of the fabric taken at 120x magnification is shown in FIG. 42.

Example 6

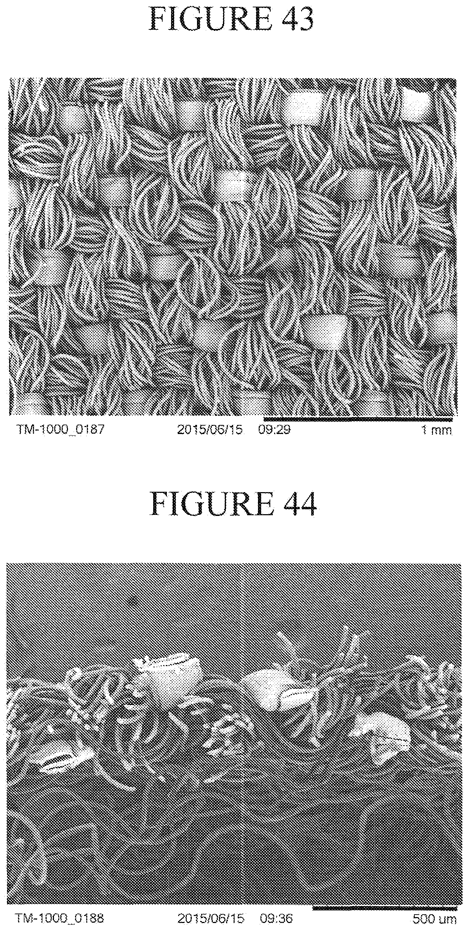

The ePTFE fiber from Example 5 was woven to comprise a fabric blend of a 70/34 (denier/filaments) textured 6,6 nylon and the ePTFE fiber. The obtained nylon fiber measured 78 dtex. The weave pattern was a 1x2 twill and had a thread count of 100 x 100 threads/inch (37.7 x 36.2 threads/cm, Warp x Fill). The warp fibers were comprised of the polyamide fibers, and the fill fibers were comprised of the ePTFE fiber in every other pick. The woven fabric was comprised of 32% ePTFE and 68% polyamide by weight. The woven fabric had the following properties: air permeability = 75 cfm, weight = 132 gsm, water weight gain = 34 gsm, with some stretch and recovery capability due to the textured nylon. A scanning electron micrograph of the surface of the woven fabric taken at 80x magnification is shown in FIG. 43. A scanning electron micrograph of a cross-section view of the fabric taken at 120x magnification is shown in FIG. 44.

The invention of this application has been described above both generically and with regard to specific embodiments. It will be apparent to those skilled in the art that various modifications and variations can be made in the embodiments without departing from the scope of the disclosure. Thus, it is intended that the embodiments cover the modifications and variations of this invention provided they come within the scope of the appended claims.

**Claims**

1. A woven fabric comprising:

   a plurality of warp fibers and weft fibers,
   wherein the warp fibers, the weft fibers, or both the warp fibers and the weft fibers include expanded polytetrafluoroethylene (ePTFE) fibers,

      wherein the ePFTE fibers have a substantially rectangular cross sectional configuration, and
      wherein the ePTFE fibers include at least one of an additive and/or a filler that renders the ePTFE fibers hydrophilic; and

   at least one further non-ePTFE fiber; wherein said fabric has a dry time, as described herein under the heading "Weight Gain and Drying Time", of less than 30 mins, a vertical wicking, as described herein under the heading of "Vertical Wicking", of greater than 90 mm/10 mins, and a weight per unit area of less than 1000 g/m$^2$.

2. A knit fabric, comprising:

   a plurality of expanded polytetrafluoroethylene (ePTFE) fibers having a substantially rectangular configuration and a density greater than 1.2 g/cm$^3$, wherein the ePTFE fibers include at least one of an additive and/or a filler that renders the ePTFE fibers hydrophilic; and
   a plurality of knit fibers in a knit configuration;

   wherein said fabric has a dry time, as described herein under the heading "Weight Gain and Drying Time", of less than 30 mins, a vertical wicking, as described herein under the heading of "Vertical Wicking", of greater than 10 mm/10 mins, and weight per unit area of less than 1000 g/m$^2$.

3. The fabric of claim 1 or 2, further comprising a polymer membrane affixed to at least one side of said fabric.

4. The fabric of any of claims 1 to 3, wherein said ePTFE fibers have therein at least one of an oil and a polymer.

5. The fabric of any of claims 1 to 4, wherein said fabric has an average stiffness, as described herein, of less than 1000 g.

6. The fabric of any of claims 1 to 5, wherein said fabric has a tear strength, as described herein, from 10 N to 200 N.

7. The fabric of any of claims 1 to 6, wherein said fabric has a break strength, as described herein, from 100 N to 1500 N.

8. The fabric of any of claims 1 to 7, wherein said fabric has an air permeability, as described herein, of less than 500 cfm.

9. The fabric of any of claims 1 to 8, wherein said ePTFE fibers have an aspect ratio that is greater than 1, or said ePTFE fibers have an aspect ratio of 1.

10. The fabric of any of claims 1 to 9, wherein said at least one further non- ePTFE fiber is a fire resistant fiber.

11. The fabric of any of claims 1 to 10, wherein said ePTFE fibers have a weight per length from 20 dtex to 1200 dtex.

12. The fabric of any of claims 1 to 11, wherein said ePTFE fibers have a tenacity, as described herein, of greater than 1.5 cN/dtex.

13. The fabric of any of claims 1, and claims 3 to 12 when dependent upon claim 1, wherein said warp fibers and said weft fibers have a fluoroacrylate coating to render said fabric oleophobic.

14. The fabric of any of claims 1 to 13, wherein said at least one further non-ePTFE fiber is selected from the group consisting of rayon, polyester, polyethylene, polypropylene, cotton, wool, silk, aramid, polyamide, acrylic, olefin, spandex, aramids, flame resistant cottons, polybenzimidazole (PBI®), polybenzoxazole (PBO), flame resistant rayon, modacrylic blends, carbon, fiberglass, polyacrylonitrile (PAN) and combinations thereof.

15. The fabric according to any of claims 1, and claims 3 to 14 when dependent upon claim 1, wherein at least one of said warp fibers and said weft fibers comprise a monofilament PTFE fiber.

16. The fabric according to any of claims 2, and claims 3 to 14 when dependent upon claim 2, comprising: a plurality of monofilament PTFE fibers; and
a plurality of further knit fibers in a knit configuration.


**Patentansprüche**

1. Webstoff, umfassend:

eine Vielzahl von Kettfasern und Schussfasern,
wobei die Kettfasern, die Schussfasern oder sowohl die Kettfasern als auch die Schussfasern expandierte Polytetrafluorethylen(ePTFE)-Fasern beinhalten,
wobei die ePFTE-Fasern eine im Wesentlichen rechteckige Querschnittskonfiguration aufweisen, und
wobei die ePTFE-Fasern mindestens eines von einem Additiv und/oder einem Füllstoff beinhalten, durch das/den die ePTFE-Fasern hydrophil gemacht werden; und
mindestens eine weitere Nicht-PTFE-Faser; wobei das Gewebe eine Trocknungszeit, wie hierin unter dem Stichwort "Gewichtszunahme und Trocknungszeit" beschrieben, von weniger als 30 Minuten, eine vertikale Dochtwirkung, wie hierin unter dem Stichwort "Vertikale Dochtwirkung" beschrieben, von größer als 90 mm/10 Minuten und ein Flächengewicht von weniger als 1000 g/m$^2$ aufweist.

2. Strickgewebe, umfassend:

eine Vielzahl von expandierten Polytetrafluorethylen(ePTFE)-Fasern mit einer im Wesentlichen rechteckigen Konfiguration und einer Dichte von größer als 1,2 g/cm$^3$, wobei die ePTFE-Fasern mindestens eines von einem Additiv und/oder einem Füllstoff beinhalten, durch das/den die ePTFE-Fasern hydrophil gemacht werden; und eine Vielzahl von Strickfasern in einer Strickkonfiguration;
wobei das Gewebe eine Trocknungszeit, wie hierin unter dem Stichwort "Gewichtszunahme und Trocknungszeit" beschrieben, von weniger als 30 Minuten, eine vertikale Dochtwirkung, wie hierin unter dem Stichwort "Vertikale Dochtwirkung" beschrieben, von mehr als 10 mm/10 Minuten und ein Flächengewicht von weniger als 1000 g/m$^2$ aufweist.

3. Gewebe nach Anspruch 1 oder 2, ferner umfassend eine Polymermembran, die an mindestens einer Seite des Gewebes befestigt ist.

4. Gewebe nach einem der Ansprüche 1 bis 3, wobei die ePTFE-Fasern darin mindestens eines von einem Öl und einem Polymer aufweisen.

5. Gewebe nach einem der Ansprüche 1 bis 4, wobei das Gewebe eine durchschnittliche Steifigkeit, wie hierin beschrieben, von weniger als 1000 g aufweist.

6. Gewebe nach einem der Ansprüche 1 bis 5, wobei das Gewebe eine Reißfestigkeit, wie hierin beschrieben, von 10 N bis 200 N aufweist.

7. Gewebe nach einem der Ansprüche 1 bis 6, wobei das Gewebe eine Bruchfestigkeit, wie hierin beschrieben, von 100 N bis 1500 N aufweist.

8. Gewebe nach einem der Ansprüche 1 bis 7, wobei das Gewebe eine Luftdurchlässigkeit, wie hierin beschrieben, von weniger als 500 cfm aufweist.

9. Gewebe nach einem der Ansprüche 1 bis 8, wobei die ePTFE-Fasern ein Seitenverhältnis aufweisen, das größer als 1 ist, oder die ePTFE-Fasern ein Seitenverhältnis von 1 aufweisen.

10. Gewebe nach einem der Ansprüche 1 bis 9, wobei die mindestens eine weitere NichtePTFE-Faser eine feuerbeständige Faser ist.

11. Gewebe nach einem der Ansprüche 1 bis 10, wobei die ePTFE-Fasern ein Längengewicht von 20 dtex bis 1200 dtex aufweisen.

12. Gewebe nach einem der Ansprüche 1 bis 11, wobei die ePTFE-Fasern eine Festigkeit, wie hierin beschrieben, von größer als 1,5 cN/dtex aufweisen.

13. Gewebe nach einem der Ansprüche 1 und Ansprüche 3 bis 12, wenn von Anspruch 1 abhängig, wobei die Kettfasern und die Schussfasern eine Fluoracrylatbeschichtung aufweisen, um das Gewebe oleophob zu machen.

14. Gewebe nach einem der Ansprüche 1 bis 13, wobei die mindestens eine weitere NichtePTFE-Faser ausgewählt ist aus der Gruppe bestehend aus Rayon, Polyester, Polyethylen, Polypropylen, Baumwolle, Wolle, Seide, Aramid, Polyamid, Acryl, Olefin, Spandex, Aramiden, flammbeständigen Baumwollen, Polybenzimidazol (PBI®), Polybenzoxazol (PbO), flammbeständigem Rayon, Modacrylmischungen, Kohlenstoff, Fiberglas, Polyacrylnitril (PAN) und Kombinationen davon.

15. Gewebe gemäß einem der Ansprüche 1 und Ansprüche 3 bis 14, wenn von Anspruch 1 abhängig, wobei mindestens eines von den Kettfasern und den Schussfasern eine monofile PTFE-Faser umfasst.

16. Gewebe gemäß einem der Ansprüche 2 und Ansprüche 3 bis 14, wenn von Anspruch 2 abhängig, umfassend: eine Vielzahl von monofilen PTFE-Fasern; und
eine Vielzahl von weiteren Strickfasern in einer Strickkonfiguration.


## Revendications

1. Étoffe tissée comprenant :

   une pluralité de fibres de chaîne et de fibres de trame,
   dans laquelle les fibres de chaîne, les fibres de trame ou à la fois les fibres de chaîne et les fibres de trame comprennent des fibres de polytétrafluoroéthylène expansé (ePTFE),
   dans laquelle les fibres d'ePTFE ont une configuration de section transversale sensiblement rectangulaire, et
   dans laquelle les fibres d'ePTFE comprennent au moins l'un d'un additif et/ou d'une charge qui rend les fibres d'ePTFE hydrophiles ; et
   au moins une autre fibre non en PTFE ; ladite étoffe ayant un temps de séchage, tel que décrit ici sous la rubrique « Gain de poids et temps de séchage », inférieur à 30 minutes, un effet mèche vertical, tel que décrit ici sous la rubrique « Effet mèche vertical », supérieur à 90 mm/10 minutes, et un poids par unité de surface inférieur à 1 000 g/m$^2$.

2. Étoffe maillée, comprenant :

   une pluralité de fibres de polytétrafluoroéthylène expansé (ePTFE) ayant une configuration sensiblement rectangulaire et une densité supérieure à 1,2 g/cm$^3$, dans laquelle les fibres d'ePTFE comprennent au moins l'un d'un additif et/ou d'une charge qui rend les fibres d'ePTFE hydrophiles ;
   et
   une pluralité de fibres maillées en configuration maillée ;
   ladite étoffe ayant un temps de séchage, tel que décrit ici sous la rubrique « Gain de poids et temps de séchage », inférieur à 30 minutes, un effet mèche vertical, tel que décrit ici sous la rubrique « Effet mèche vertical », supérieur à 10 mm/10 minutes, et un poids par unité de surface inférieur à 1 000 g/m$^2$.

**3.** Étoffe de la revendication 1 ou 2, comprenant en outre une membrane polymère fixée sur au moins un côté de ladite étoffe.

**4.** Étoffe de l'une quelconque des revendications 1 à 3, dans laquelle lesdites fibres d'ePTFE contiennent au moins l'un d'une huile et d'un polymère.

**5.** Étoffe de l'une quelconque des revendications 1 à 4, ladite étoffe ayant une rigidité moyenne, telle que décrite ici, inférieure à 1 000 g.

**6.** Étoffe de l'une quelconque des revendications 1 à 5, ladite étoffe ayant une résistance à la déchirure, telle que décrite ici, de 10 N à 200 N.

**7.** Étoffe de l'une quelconque des revendications 1 à 6, ladite étoffe ayant une résistance à la rupture, telle que décrite ici, de 100 N à 1 500 N.

**8.** Étoffe de l'une quelconque des revendications 1 à 7, ladite étoffe ayant une perméabilité à l'air, telle que décrite ici, inférieure à 500 pieds cubes/min.

**9.** Étoffe de l'une quelconque des revendications 1 à 8, dans laquelle lesdites fibres d'ePTFE ont un rapport de forme qui est supérieur à 1, ou lesdites fibres d'ePTFE ont un rapport de forme de 1.

**10.** Étoffe de l'une quelconque des revendications 1 à 9, dans laquelle ladite ou lesdites autres fibres non ePTFE sont des fibres ignifuges.

**11.** Étoffe de l'une quelconque des revendications 1 à 10, dans laquelle lesdites fibres d'ePTFE ont un poids par longueur de 20 dtex à 1200 dtex.

**12.** Étoffe de l'une quelconque des revendications 1 à 11, dans laquelle lesdites fibres d'ePTFE ont une ténacité, telle que décrite ici, supérieure à 1,5 cN/dtex.

**13.** Étoffe de l'une quelconque de la revendication 1, et des revendications 3 à 12 lorsqu'elles dépendent de la revendication 1, dans laquelle lesdites fibres de chaîne et lesdites fibres de trame ont un revêtement de fluoroacrylate pour rendre ladite étoffe oléophobe.

**14.** Étoffe de l'une quelconque des revendications 1 à 13, dans laquelle ladite ou lesdites autres fibres non ePTFE sont choisies dans le groupe constitué par la rayonne, le polyester, le polyéthylène, le polypropylène, le coton, la laine, la soie, l'aramide, le polyamide, l'acrylique, l'oléfine, le spandex, les aramides, les cotons ignifuges, le polybenzimidazole (PBI®), le polybenzoxazole (PBO), la rayonne ignifuge, les mélanges modacryliques, le carbone, la fibre de verre, le polyacrylonitrile (PAN) et les combinaisons de ceux-ci.

**15.** Étoffe selon l'une quelconque de la revendication 1, et des revendications 3 à 14 lorsqu'elles dépendent de la revendication 1, dans laquelle au moins une desdites fibres de chaîne et desdites fibres de trame comprend une fibre de PTFE monofilament.

**16.** Étoffe selon l'une quelconque de la revendications 2, et des revendications 3 à 14 lorsqu'elles dépendent de la revendication 2, comprenant : une pluralité de fibres de PTFE monofilament ; et une pluralité de fibres maillées supplémentaires en configuration maillée.

# FIGURE 1

TM-1000_1384          2014/06/13          L    x1.0k    100 um

# FIGURE 2

TM-1000_1356          2014/06/12          L    x80      1 mm

# FIGURE 3

TM-1000_1367          2014/06/13          L   x120    500 um

# FIGURE 4

TM-1000_1358          2014/06/12          L   x80     1 mm

# FIGURE 5

TM-1000_1365      2014/06/13      L  x120   500 um

# FIGURE 6

TM-1000_1355      2014/06/12      L  x80   1 mm

# FIGURE 7

TM-1000_1369          2014/06/13          L    x120      500 um

# FIGURE 8

TM-1000_1389          2014/06/13          L    x1.0k      100 um

# FIGURE 9

TM-1000_1348          2014/06/12          L    x80       1 mm

# FIGURE 10

TM-1000_1378          2014/06/13          L    x120      500 um

# FIGURE 11

TM-1000_1350                2014/06/12            L    x80        1 mm

# FIGURE 12

TM-1000_1374                2014/06/13            L    x120      500 um

# FIGURE 13

TM-1000_1352 2014/06/12 L x80 1 mm

# FIGURE 14

TM-1000_1371 2014/06/13 L x120 500 um

# FIGURE 15

TM-1000_1354      2014/06/12      L    x80     1 mm

# FIGURE 16

TM-1000_1382      2014/06/13      L    x120     500 um

# FIGURE 17

TM-1000_1387          2014/06/13          L    x1.0k    100 um

# FIGURE 18

TM-1000_1353          2014/06/12          L    x80    1 mm

# FIGURE 19

TM-1000_1380          2014/06/13          L   x120     500 um

# FIGURE 20

TM-1000_1349          2014/06/12          L   x80      1 mm

# FIGURE 21

TM-1000_1376          2014/06/13          L   x120     500 um

# FIGURE 22

TM-1000_0182          2015/06/15   09:03                    1 mm

# FIGURE 23

TM-1000_0185      2015/06/15  09:19     1 mm

# FIGURE 24

TM-1000_0180      2015/06/15  08:48     1 mm

# FIGURE 25

TM-1000_0183        2015/06/15   09:13                    1 mm

# FIGURE 26

TM-1000_0181        2015/06/15   08:50                    1 mm

# FIGURE 27

TM-1000_0184          2015/06/15   09:15                    1 mm

# FIGURE 28

TM-1000_1345          2014/06/12            L   x100      1 mm

# FIGURE 29

TM-1000_1370          2014/06/13          L    x120    500 um

# FIGURE 30

TM-1000_1360          2014/06/12          L    x80    1 mm

# FIGURE 31

TM-1000_1361       2014/06/13       L   x120   500 um

# FIGURE 32

TM-1000_0648       2013/04/01       L   x1.0k   100 um

# FIGURE 33

TM-1000_0002          2014/10/17   16:20                    1 mm

# FIGURE 34

TM-1000_0057          2014/10/28   16:41                    1 mm

# FIGURE 35

TM-1000_0041        2014/10/28  16:06        500 um

# FIGURE 36

TM-1000_0190        2015/06/15  09:40        500 um

# FIGURE 37

TM-1000_0053        2014/10/28   16:36                    1 mm

# FIGURE 38

TM-1000_0039        2014/10/28   16:04                    500 um

# FIGURE 39

TM-1000_0189          2015/06/15   09:38                     500 um

# FIGURE 40

TM-1000_0069          2014/10/28   16:53                     1 mm

# FIGURE 41

TM-1000_0049          2014/10/28   16:16                    500 um

# FIGURE 42

TM-1000_0191          2015/06/15   09:41                    500 um

# FIGURE 43

TM-1000_0187          2015/06/15   09:29                    1 mm

# FIGURE 44

TM-1000_0188          2015/06/15   09:36                    500 um

**EP 3 155 153 B1**

**Patent documents cited in the description**

- WO 2013151950 A1
- WO 9402668 A
- US 20150079865 A, Minor
- US 7060354 B, Baille
- US 20140120286 A, Wendlandt
- US 8187733 B, Kelmartin
- US 5708044 A, Branca
- US 6541589 B, Baillie
- US 7531611 B, Sabol
- US 8637144 B, Ford
- US 410050, Xu
- US 20140212612 A, Sbriglia
- US 62030419, Sbriglia
- US 62030408, Sbriglia
- US 62030442, Sbriglia